# EUROPEAN PATENT APPLICATION

(11) **EP 4 224 307 A1**
(43) Date of publication of application: **09.08.2023**
(21) Application number: 21884852.1
(22) Date of filing: 27.09.2021
(51) Int. Cl.: G06F 3/14, H04M 1/72448

(54) **SCREEN PROJECTION METHOD FOR APPLICATION WINDOW AND ELECTRONIC DEVICES**

(30) Priority: 31.10.2020 CN 202011195469
(71) Applicant: Huawei Technologies Co., Ltd., Shenzhen, Guangdong 518129 (CN)
(72) Inventor: CHEN, Guangjun, Shenzhen, Guangdong 518129 (CN); WANG, Bo, Shenzhen, Guangdong 518129 (CN); ZHU, Pei, Shenzhen, Guangdong 518129 (CN); XU, Bo, Shenzhen, Guangdong 518129 (CN); JIANG, Xiuping, Shenzhen, Guangdong 518129 (CN); WANG, Yongde, Shenzhen, Guangdong 518129 (CN); FANG, Jie, Shenzhen, Guangdong 518129 (CN)
(74) Representative: Gill Jennings & Every LLP
(86) International application number: PCT/CN2021/121041
(87) International publication number: WO 2022/089122

(57) **Abstract**

An application window projection method and an electronic device are provided. The method is applicable to a system including a first electronic device and a second electronic device. The method includes: The first electronic device establishes a connection to the second electronic device. The first electronic device projects a first window of an application onto the second electronic device. The second electronic device displays the first window. The first electronic device displays a second window of the application. In this manner, a projection granularity is each window of the application.

## Description

### CROSS-REFERENCE TO RELATED APPLICATIONS

This application claims priority to Chinese Patent Application No. 202011195469.7, filed with the China National Intellectual Property Administration on October 31, 2020 and entitled "APPLICATION WINDOW PROJECTION METHOD AND ELECTRONIC DEVICE", which is incorporated herein by reference in its entirety.

### TECHNICAL FIELD

This application relates to the field of projection technologies, and in particular, to an application window projection method and an electronic device.

### BACKGROUND

A projection technology is an emerging technology, and means that an electronic device can project a display interface of a display of the electronic device onto another electronic device for display. For example, a movie on a mobile phone can be played on a television, or a picture in a tablet computer can be displayed on a television.

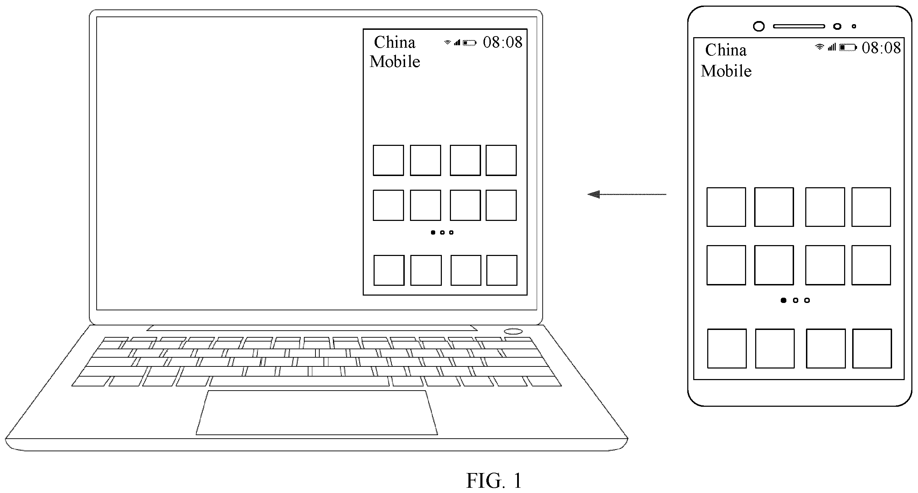

For example, a mobile phone projects a screen onto a PC. Generally, a process in which the mobile phone projects the screen onto the PC includes: A user triggers a projection operation on the mobile phone. The mobile phone establishes a projection connection to the PC. The mobile phone sends a current interface to the PC. In this way, both the PC and the mobile phone display the current interface. For example, as shown in FIG. 1, both the mobile phone and the PC display a home screen of the mobile phone. However, when two devices display a same interface, actually, a user only needs to perform an operation on one device. As a result, the interface of the other device is rarely used.

### SUMMARY

An objective of this application is to provide an application window projection method and an electronic device, to improve projection experience.

According to a first aspect, an application window projection method is provided. The method is applicable to a system including a first electronic device and a second electronic device. The method includes: A first electronic device establishes a connection to a second electronic device. The first electronic device projects a first window of an application onto the second electronic device. The second electronic device displays the first window. The first electronic device displays a second window of the application.

In other words, a projection granularity may be each window of the application. For example, a MeeTime application includes a plurality of windows. The first electronic device (for example, a mobile phone) may project some or all windows of the MeeTime application onto the second electronic device (for example, a PC). For example, the mobile phone projects a screen onto the PC. For example, the first window is a "Contacts" window of the MeeTime application, and the second window is a chat window for chatting with a contact A. A user can view the " Contacts" window on the PC and view the chat window for chatting with the contact A on the mobile phone, without a need to switch back and forth between different windows of the application on the mobile phone.

It should be noted that, in this embodiment of this application, when the first electronic device projects the first window onto the second electronic device, the first electronic device can display the second window. In other words, a step of projecting the first window of the application by the first electronic device onto the second electronic device and a step of displaying the second window of the application by the first electronic device may be performed simultaneously, or certainly may not be performed simultaneously.

In a possible design, the second window is a window previous to the first window, a default window of the application, or a specified window of the application.

In other words, when the first electronic device projects the first window onto the second electronic device, the first electronic device displays the window previous to the first window, namely, the second window, or displays the default window or the specified window. The default window is a window that is set by default in an electronic device system. The specified window is window set by the user. The first window is a window previous to a window currently opened.

In a possible design, that the first electronic device projects a first window of an application onto the second electronic device for display includes: In response to an operation for opening the first window, the first electronic device projects the first window onto the second electronic device for display.

In other words, when detecting the operation for opening the first window, the first electronic device automatically projects the first window onto the second electronic device for display, and the first electronic device may not display the first window. In this manner, fast and efficient projection is implemented.

In a possible design, the operation for opening the first window includes an operation for opening an image and/or an operation for playing a video file.

In other words, when detecting the operation for opening the image, the first electronic device projects the image onto the second electronic device for display. Alternatively, when detecting an operation for playing a video, the first electronic device projects the video onto the second electronic device for display. For example, the mobile phone projects the screen onto the PC. Generally, a small display of the mobile phone results in poor effect of viewing an image or watching a video. In the manner provided in this application, when an image or a video is opened on the mobile phone, the image or the video can be directly projected onto the PC for display, to implement more convenient and efficient projection.

In a possible design, that the first electronic device projects a first window of an application onto the second electronic device for display includes: In response to an operation for opening the first window, the first electronic device displays the first window on a display of the first electronic device. In response to an operation for projecting the second window, the first electronic device projects the first window onto the second electronic device for display.

In other words, in response to the operation for opening the first window, the first electronic device first displays the first window. In response to the operation for projecting the first window, the first electronic device projects the first window onto the second electronic device, and the first electronic device closes the first window and displays the second window. For example, the mobile phone projects the screen onto the PC. The first window is first displayed on the mobile phone, and the user projects the first window as required. This helps prevent a window including user privacy from being disclosed to others due to automatic projection.

In a possible design, before the first electronic device projects a first window of an application onto the second electronic device, the method further includes: The first electronic device displays the first window and the second window. That the first electronic device displays a second window of the application includes: The first electronic device displays the second window in full screen.

In other words, when the first electronic device displays the first window and the second window in split screens, if the first electronic device projects the first window onto the second electronic device, the first electronic device can display the second window in full screen. In this way, a plurality of windows of the application can be distributed and displayed on different devices, to avoid a case in which the plurality of windows of the application cannot be better viewed because the display of the first electronic device is small.

In a possible design, that the first electronic device projects a first window of an application onto the second electronic device for display includes: In response to a first operation, the first electronic device displays a plurality of identifiers of a plurality of devices onto which a screen is to be projected. In response to an operation for selecting an identifier of the second electronic device from the plurality of identifiers, the first electronic device projects the first window onto the second electronic device for display. In other words, the user can select, from the plurality of devices onto which a screen is to be projected, a second electronic device onto which the user wants to project a screen, and then project the first window onto the second electronic device. This provides good user experience.

In a possible design, that the first electronic device projects a first window of an application onto the second electronic device for display includes: The first electronic device displays a plurality of candidate windows of the application in response to a second operation. In response to an operation for selecting the first window from the plurality of candidate windows, the first electronic device projects the first window onto the second electronic device for display. In other words, the user can select, from the plurality of candidate windows of the application, a first window that the user wants to project. This provides good experience.

In a possible design, the candidate window includes:
all windows of the application that have been opened by the first electronic device;
a preset window of the application;
a window that is of the application and that is specified by a user;
a window that is of the application and whose opening frequency or times of opening is greater than a preset value; or
a window that is of the application and whose foreground running duration is longer than preset duration.

It should be noted that the foregoing several candidate windows are merely examples, and do not constitute a limitation. Another type of window can be also used as a candidate window. This is not limited in this embodiment of this application.

In a possible design, the method further includes: The first electronic device opens a third window of the application. The first electronic device projects the third window onto the second electronic device. The second electronic device displays the third window. The third window on the second electronic device completely or incompletely covers the first window.

In other words, when opening a new window (namely, the third window) of the application, the first electronic device can further project the new window onto the second electronic device, that is, the projection granularity is each window of the application. Therefore, the second electronic device displays two windows, namely, the third window and the second window. The third window may completely cover the first window (that is, the first window is hidden). Alternatively, the third window may not completely cover the first window, for example, cover a part of the first window. Alternatively, the third window does not cover the first window at all (that is, the plurality of windows are displayed in split screens or simultaneously displayed).

In a possible design, the method further includes: In response to a first instruction used to return the first window to the first electronic device for display, the first electronic device displays the first window and the second electronic device closes the first window. In other words, the first window that is projected onto the second electronic device can be returned to the first electronic device for display. This provides a flexible operation and good user experience.

In a possible design, the first instruction used to return the first window to the first electronic device for display includes: an operation instruction that is detected on the second electronic device and that is used to close the first window on the second electronic device, or an operation instruction that is detected on the first electronic device and that is used to open the first window on the first electronic device. In other words, when closing the first window on the second electronic device, the user can return the first window to the first electronic device for display. Alternatively, when opening the first window on the first electronic device, the user can return the first window to the first electronic device for display.

In a possible design, the application further includes a fourth window. The method further includes: An operation for opening the second window is detected on the second electronic device. The second electronic device sends a second instruction to the first electronic device in response to the operation for opening the second window. The first electronic device projects the second window onto the second electronic device in response to the received second instruction. The second electronic device displays the second window. The second window on the second electronic device completely or incompletely covers the first window. The first electronic device displays the fourth window. In other words, the first electronic device can successively project two windows of the application onto the second electronic device, and the two windows can be displayed in the second electronic device in an overlapping manner or in a non-overlapping manner.

In a possible design, the application further includes a fourth window. The system further includes a third electronic device. The method further includes: The first electronic device is connected to the third electronic device. The first electronic device projects the second window onto the third electronic device. The third electronic device displays the second window. The first electronic device displays the fourth window of the application. In other words, the first electronic device can project the first window of the application onto the second electronic device, and project the second window of the application onto the third electronic device. In this way, the plurality of windows of the application can be distributed and displayed on a plurality of electronic devices, to facilitate viewing by the user.

In a possible design, that the first electronic device projects a first window of an application onto the second electronic device includes: The first electronic device creates the first window in a first task stack. A window in the first task stack is configured to be projected onto the second electronic device for display. The first task stack is different from a second task stack in which the second window is located. A window in the second task stack is configured to be displayed on a display of the first electronic device.

It should be noted that, in this embodiment of this application, the first window and the second window of the application are located in different task stacks. The window in the second task stack is displayed on the first electronic device. The window in the first task stack is projected onto the second electronic device for display. In other words, stack splitting processing is performed on different windows of the application, to achieve display effect of different windows on different devices.

In a possible design, that the first electronic device projects a first window of an application onto the second electronic device includes: The first electronic device creates the first window in a second task stack in response to the operation for opening the first window. A window in the second task stack is configured to be displayed on a display of the first electronic device. In response to an operation for projecting the first window, the first electronic device creates the first window in a first task stack, and closes the first window in the second task stack. A window in the first task stack is configured to be projected onto the second electronic device for display.

It should be noted that, in this embodiment of this application, a same task stack (for example, the second task stack) of an application may include two windows, for example, the first window and the second window. If the first electronic device wants to project the first window onto the second electronic device for display, stack splitting processing may be performed on the first window, so that the first window is located in the first task stack, to project the first window onto the second electronic device. In other words, different windows originally in a same task stack are located in different task stacks, to implement display effect on different devices. For example, the first window located in the first task stack is projected onto the second electronic device for display. The second window still in the second task stack is displayed on the first electronic device.

In a possible design, the method further includes: In response to an operation for returning the first window to the first electronic device for display, the first electronic device determines, based on an original stack marker of the first task stack, that an original task stack of the first window is the second task stack. The first electronic device creates the first window in the second task stack. The first electronic device closes the first window in the first task stack. In other words, if the first electronic device needs to return the projected first window to the first electronic device for display, the first electronic device can return the first window in the first task stack to the second task stack in which the first window is originally located, so that the first window is displayed on the first electronic device.

In a possible design, that the first electronic device projects a first window of an application onto the second electronic device includes: The first electronic device displays a plurality of task stacks of the application in response to a preset operation. In response to an operation for selecting a third task stack from the plurality of task stacks, the first electronic device projects all windows in the third task stack onto the second electronic device. In other words, the first electronic device can project all windows in a task stack onto the second electronic device, that is, a task stack of an application is used as a projection granularity.

According to a second aspect, an application window projection method is provided. The method is applicable to a first electronic device. The first electronic device includes an application. The application includes a first window and a second window. The method includes:
The first electronic device is connected to the second electronic device.

The first electronic device projects the first window onto the second electronic device for display.

The first electronic device displays the second window.

In a possible design, the second window is a window previous to the first window, a default window of the application, or a specified window of the application.

In a possible design, that the first electronic device projects the first window of the application onto the second electronic device for display includes: In response to an operation for opening the first window, the first electronic device projects the first window onto the second electronic device for display.

In a possible design, the operation for opening the first window includes an operation for opening an image and/or an operation for playing a video file.

In a possible design, that the first electronic device projects the first window of the application onto the second electronic device for display includes: The first electronic device displays the first window in response to an operation for opening the first window. In response to an operation for projecting the second window, the first electronic device projects the first window onto the second electronic device for display.

In a possible design, before the first electronic device projects the first window onto the second electronic device, the method further includes: The first electronic device displays the first window and the second window. That the first electronic device displays the second window includes: The first electronic device displays the second window in full screen.

In a possible design, that the first electronic device projects the first window of the application onto the second electronic device for display includes: In response to a first operation, the first electronic device displays a plurality of identifiers of a plurality of devices onto which a screen is to be projected. In response to an operation for selecting an identifier of the second electronic device from the plurality of identifiers, the first electronic device projects the first window onto the second electronic device for display.

In a possible design, that the first electronic device projects the first window of the application onto the second electronic device for display includes: The first electronic device displays a plurality of candidate windows of the application in response to a second operation. In response to an operation for selecting the first window from the plurality of candidate windows, the first electronic device projects the first window onto the second electronic device for display.

In a possible design, the candidate window includes:
all windows of the application that have been opened by the first electronic device;
a preset window of the application;
a window that is of the application and that is specified by a user;
a window that is of the application and whose opening frequency or times of opening is greater than a preset value; or
a window that is of the application and whose foreground running duration is longer than preset duration.

In a possible design, in response to a first instruction used to return the first window to the first electronic device for display, the first electronic device displays the first window, and controls the second electronic device to close the first window.

In a possible design, the first instruction includes a first instruction received from the second electronic device. The first instruction is an operation instruction that is detected on the second electronic device and that is used to close the first window on the second electronic device, or an operation instruction that is detected on the first electronic device and that is used to open the first window on the first electronic device.

In a possible design, the application further includes a fourth window. A system further includes a third electronic device. The method further includes: The first electronic device is connected to the third electronic device. The first electronic device projects the second window onto the third electronic device. The first electronic device displays the fourth window.

In a possible design, that the first electronic device projects the first window onto the second electronic device for display includes: The first electronic device creates the first window of the application in a first task stack. A window in the first task stack is configured to be projected onto a display of the second electronic device for display. The first task stack is different from a second task stack in which the second window is located. A window in the second task stack is configured to be displayed on a display of the first electronic device.

In a possible design, that the first electronic device projects the first window onto the second electronic device for display includes: The first electronic device creates the first window in a second task stack in response to the operation for opening the first window. A window in the second task stack is configured to be displayed on a display of the first electronic device. In response to an operation for projecting the first window, the first electronic device creates the first window in a first task stack and closes the first window in the second task stack. A window in the first task stack is configured to be projected onto a display of the second electronic device for display.

In a possible design, the method further includes: In response to an operation for returning the first window to the first electronic device for display, the first electronic device determines, based on an original stack marker of the first task stack, that an original task stack of the first window is the second task stack. The first electronic device creates the first window in the second task stack. The first electronic device closes the first window in the first task stack.

In a possible design, that the first electronic device projects the first window of the application onto the second electronic device includes: The first electronic device displays a plurality of task stacks of the application in response to a preset operation. In response to an operation for selecting a third task stack from the plurality of task stacks, the first electronic device projects all windows in the third task stack onto the second electronic device.

According to a third aspect, an application window projection method is further provided. The method is applicable to a second electronic device. The method includes:
The second electronic device is connected to a first electronic device.

The second electronic device receives first display information sent by the first electronic device, and displays a first window based on the first display information.

The second electronic device receives second display information sent by the first electronic device, and displays a second window based on the second display information. The second window is a window displayed on the first electronic device when the second electronic device displays the first window. The second window and the first window come from a same application on the first electronic device.

The second window completely or incompletely covers the first window.

In a possible design, the method further includes: The second electronic device receives a first instruction used to return the first window to the first electronic device, and close the first window. The second electronic device sends a second instruction to the first electronic device. The second instruction is used to instruct the first electronic device to display the first window.

In a possible design, that the first instruction used to return the first window to the first electronic device includes an operation instruction that is detected on the second electronic device and that is used to close the first window on the second electronic device, or the first instruction received from the first electronic device. The first instruction is used to instruct to open the first window on the first electronic device.

According to a fourth aspect, an electronic device is provided, including a display, one or more processors, a memory, and one or more programs. The one or more programs are stored in the memory. The one or more programs include instructions. When the instructions are executed by the electronic device, the electronic device is enabled to perform the method according to any one of the first aspect to the third aspect.

According to a fifth aspect, an embodiment of this application further provides an electronic device. The electronic device includes a module/unit for performing the method according to any one of the first aspect to the third aspect. The module/unit may be implemented by using hardware, or may be implemented by hardware executing corresponding software.

According to a sixth aspect, an embodiment of this application further provides a chip. The chip is coupled to a memory in an electronic device, and is configured to invoke a computer program stored in the memory and perform the technical solutions according to any one of the first aspect to the third aspect of embodiments of this application. "Coupling" in this embodiment of this application means that two components are directly or indirectly combined with each other.

According to a seventh aspect, a computer-readable storage medium is further provided. The computer-readable storage medium includes a computer program. When the computer program is run on an electronic device, the electronic device is enabled to perform the technical solutions according to any one of the first aspect to the third aspect.

According to an eighth aspect, a program product is further provided, including instructions. When the instructions are run on a computer, the computer is enabled to perform the technical solutions according to any one of the first aspect to the third aspect.

According to a ninth aspect, a system is further provided, including a first electronic device and a second electronic device. The first electronic device is configured to perform the method steps according to the second aspect, and the second electronic device performs the method steps according to the third aspect.

According to a tenth aspect, a graphical user interface on an electronic device is further provided. The electronic device has a display, one or more memories, and one or more processors. The one or more processors are configured to execute one or more computer programs stored in the one or more memories. The graphical user interface includes a graphical user interface displayed when the electronic device performs the technical solutions according to any one of the first aspect to the third aspect.

For advantageous effect of the second aspect to the tenth aspect, refer to advantageous effect of the first aspect. Details are not described again.

### BRIEF DESCRIPTION OF DRAWINGS

FIG. 1 is a schematic diagram in which a mobile phone projects a screen onto a PC according to an embodiment of this application;
FIG. 2A is a schematic diagram of same-source projection according to an embodiment of this application;
FIG. 2B is a schematic diagram of different-source projection according to an embodiment of this application;
FIG. 3(a) to FIG. 3(c) are a schematic diagram of an application scenario according to an embodiment of this application;
FIG. 4A is a schematic diagram of a hardware structure of a primary device or a target device according to an embodiment of this application;
FIG. 4B is a schematic diagram of a software structure of a primary device or a target device according to an embodiment of this application;
FIG. 5(a) to FIG. 5(d) are a schematic diagram of a first example scenario according to an embodiment of this application;
FIG. 6A and FIG. 6B are a schematic flowchart of an application window projection method according to an embodiment of this application;
FIG. 7A(a) to FIG. 7A(c) to FIG. 7D(a) to FIG. 7D(d) are schematic diagrams of implementation principles of a first example scenario according to an embodiment of this application;
FIG. 8A(a) to FIG. 8A(d) are a schematic diagram of a second example scenario according to an embodiment of this application;
FIG. 8B to FIG. 8E(a) to FIG. 8E(c) are schematic diagrams of a second example scenario according to an embodiment of this application;
FIG. 9A and FIG. 9B are schematic diagrams of implementation principles of a third example scenario according to an embodiment of this application;
FIG. 9C is a schematic diagram of a third example scenario according to an embodiment of this application;
FIG. 10A(a) to FIG. 10A(d) are a schematic diagram of a fourth example scenario according to an embodiment of this application;
FIG. 10B to FIG. 10G are schematic diagrams of implementation principles of a fourth example scenario according to an embodiment of this application;
FIG. 11A and FIG. 11B are schematic diagrams of implementation principles of opening a new window on a target device according to an embodiment of this application; and
FIG. 12 is a schematic diagram of a structure of an electronic device according to an embodiment of this application.

### DESCRIPTION OF EMBODIMENTS

The following first describes some terms in embodiments of this application.
(1) Application (application, referred to as an app): The application is referred to as the app and is a software program that can implement one or more specific functions. Generally, a plurality of applications such as an instant messaging application, a video application, an audio application, and an image shooting application may be installed in an electronic device. The instant messaging application may include, for example, Messaging, MeeTime, WeChat (WeChat), WhatsApp Messenger, Line (Line), Instagram (Instagram), Kakao Talk, and DingTalk. The image shooting application may include, for example, a camera application (a system camera or a third-party camera application). The video application may include, for example, YouTube, Twitter, TikTok, iQIYI, and Tencent Video. The audio application may include, for example, Google Music, KuGou, Xiami Music, and QQ Music. An application mentioned in the following embodiments may be an application installed when the electronic device is delivered from the factory, or may be an application downloaded by a user from a network or obtained by the user from another electronic device during use of the electronic device.
(2) Application window (Window): The window is a display area of an application. Each application window corresponds to an activity (Activity) object, and all windows are presented through View (View). One application may correspond to a plurality of windows. Different windows may display different content of the application.
(3) Task (task) and stack (stack): The task is a set of a plurality of activities, and may also be understood as a container used to place the activity. The stack is a set of a plurality of tasks. Generally, the stack and the task are in a one-to-one relationship or a one-to-many relationship. Certainly, this is not limited in this application. For ease of description, this application is described by using an example in which the stack and the task are in the one-to-one relationship. To be specific, one stack includes one task, and tasks in different stacks are different. In this case, the task and/or the stack may be briefly referred to as a task stack.
   In the task stack, the activity is placed in a "first in, last out" form. "First in, last out" may be understood as: A task stack is created, and a first activity is placed in the task stack. The first activity is located at the top layer, and is displayed in the foreground. Subsequently, if a second activity is created in the task stack, because the first activity is pushed into the stack before the second activity, the second activity is later pushed into the stack, and the second activity is pushed into the first activity, that is, the second activity is located at an upper layer of the first activity. If the first activity and the second activity are displayed in a same location, as shown in the foreground, the second activity overwrites the first activity. After the second activity is moved from the first task stack (briefly referred to as out of the stack), because the first activity is located at the top layer of the task stack, the first activity is displayed and the second activity is not displayed in the foreground.
(4) At least one: In embodiments of this application, the at least one means one or more, and a plurality of means two or more. In addition, it should be understood that, in the descriptions of this application, terms such as "first" and "second" are only for distinction and description, but cannot be understood as indicating or implying relative importance, or as indicating or implying an order.

An application window projection method provided in this application is applicable to a projection scenario. Generally, the projection scenario includes a transmitter and a receiver. The transmitter sends display information to the receiver for display. For ease of description, the transmitter is referred to as a primary device (or a source device), and the receiver is referred to as a target device in this application. The primary device may be a mobile phone, a tablet computer, a PC, a mobile phone, a watch, or the like. The target device may be a large-screen device such as a mobile phone, a tablet computer, a PC, or a television. It may be understood that, in addition to the primary device and the target device, the transmitter and the receiver may have other names. For example, the transmitter is an active projection device, and the receiver is a passive projection device. Alternatively, the transmitter is a first electronic device, and the receiver is a second electronic device. This is not limited in this application. Roles of the transmitter and the receiver are interchangeable, that is, the transmitter may project a screen onto the receiver, and correspondingly, the receiver may also project a screen onto the transmitter.

Currently, common projection technologies include same-source projection and different-source projection.

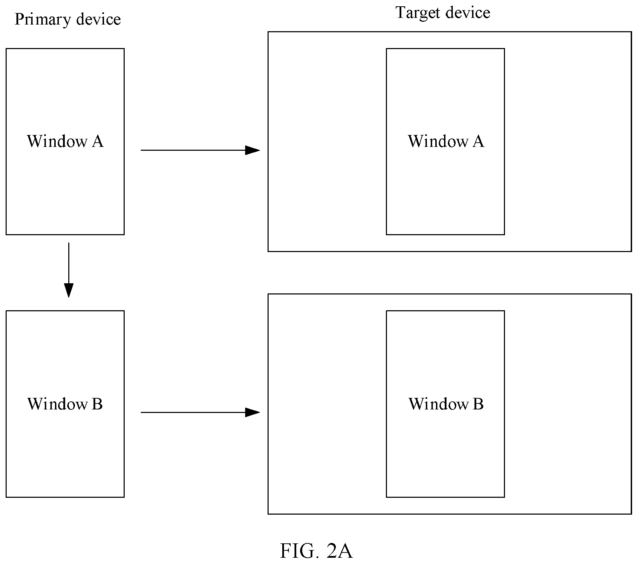

FIG. 2A is a schematic diagram of a same-source projection process. A primary device projects display information (for example, a window A) of the foreground onto a target device. The target device displays the display information (for example, the window A). When the display information of the foreground of the primary device changes, for example, switching from the window A to a window B, correspondingly, the display information of the target device also changes, that is, switching from the window A to the window B. In other words, in a same-source projection scenario, when the primary device projects a screen onto the target device, the display information of the target device is synchronized with the display information of the foreground of the primary device.

The different-source projection is different from the same-source projection. Simply, in a different-source projection scenario, when the primary device projects the screen onto the target device, the display information of the target device that is projected from the primary device may not be synchronized with the display information of the foreground of the primary device.

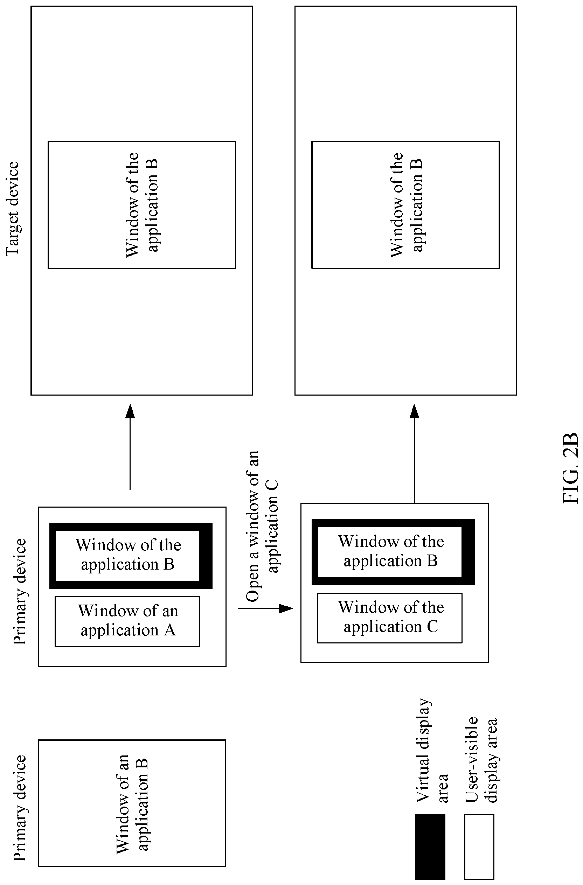

Specifically, FIG. 2B is a schematic diagram of a different-source projection process. A primary device displays a window of an application B. When the primary device projects the window of the application B onto a target device, the primary device displays the window of the application B in a created virtual display area (the virtual display area is invisible to a user). Display information in the virtual display area is projected by default onto the target device for display. In addition to the virtual display area, the primary device includes a user-visible display area. When the primary device projects the window of the application B onto the target device, a window of an application A is displayed in the user-visible display area, that is, the window of the application A is displayed in the foreground of the primary device. It is assumed that the user-visible area on the primary device is switched from the window of the application A to a window of an application C, that is, the window of the application C is displayed in the foreground of the primary device. In this case, the window of the application B is still displayed on the target device.

FIG. 2B is still used as an example. In a current different-source projection technology, all windows opened by the application B on the primary device are displayed in the virtual display area by default, that is, all windows opened by the application B are projected onto the target device for display. In other words, the primary device projects the entire application B onto the target device. Simply, a projection granularity is an application.

In the application window projection method provided in this application, a finer granularity may be used for projection, for example, one window of an application is used as a projection granularity. For example, the primary device is the mobile phone. An application on the mobile phone may include a plurality of windows. The mobile phone may project all or some windows in the plurality of windows onto the PC.

The following describes a projection scenario provided in embodiments of this application.

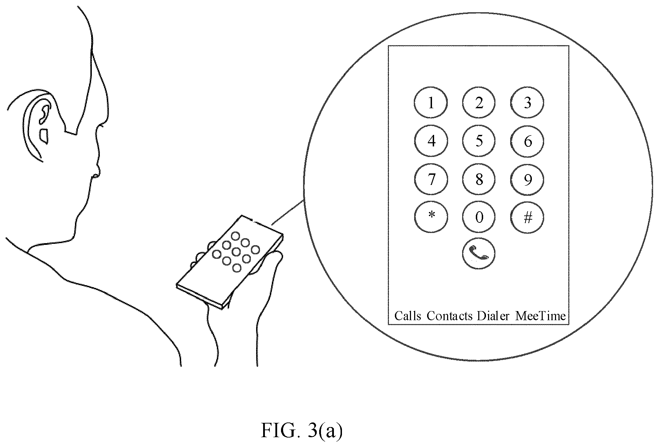

FIG. 3(a) to FIG. 3(c) are a schematic diagram of an example of a projection scenario according to this application. A mobile phone, a PC, and a television are included in the projection scenario.

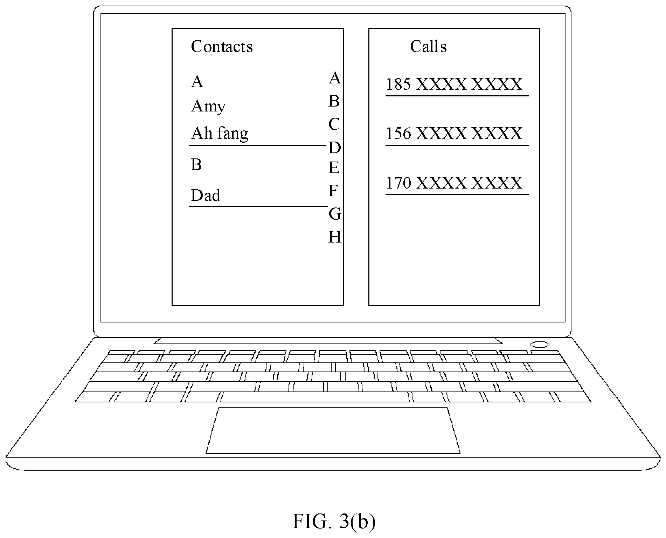

For example, the mobile phone projects a screen onto the PC. For example, refer to FIG. 3(a). A user opens a phone application on the mobile phone, and a "Dialer" window of the phone application is displayed on a display of the mobile phone. It should be understood that, for ease of understanding, the interface in a large circle in FIG. 3(a) is an enlarged view of a display interface on the mobile phone. In addition to the "Dialer" window, the phone application includes other windows such as a "Contacts" window, a "Calls" window, and a "MeeTime" window. The user may choose to project the "Contacts" window of the phone application onto the PC. Certainly, the user may also project the "Calls" window onto the PC. Refer to FIG. 3(b). Optionally, the PC can separately display the two windows that are projected from the mobile phone. In other words, the mobile phone can project different windows of an application (for example, the phone application) onto the PC. Corresponding, the PC displays the different windows of the application.

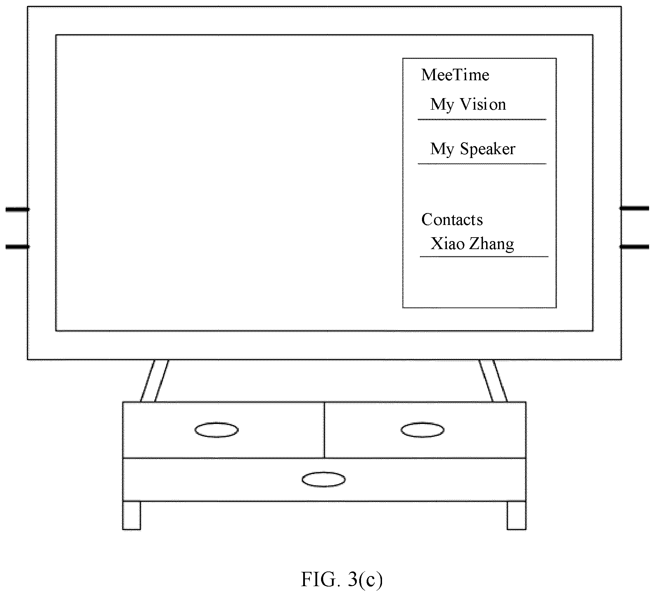

In the foregoing example, that the mobile phone projects the screen onto the PC is used as an example for description. Simply, one primary device projects a screen onto one target device. This application is further applicable to a scenario in which one primary device projects a screen onto a plurality of target devices. For example, the phone projects a screen onto both the PC and the television. For example, still refer to FIG. 3(a) and FIG. 3(b). The mobile phone projects the "Contacts" window and the "Calls" window of the phone application onto the PC. The mobile phone may also project the "MeeTime" window of the phone application onto the television, as shown in FIG. 3(c). In other words, the mobile phone may separately project different windows of an application onto different target devices. In this way, the user can view different windows of a same application on a plurality of devices. This provides better visual effect.

It should be noted that FIG. 3(a) to FIG. 3(c) are described by using the phone application on the mobile phone as an example. A projection principle for another application on the mobile phone is the same. Examples are not provided one by one.

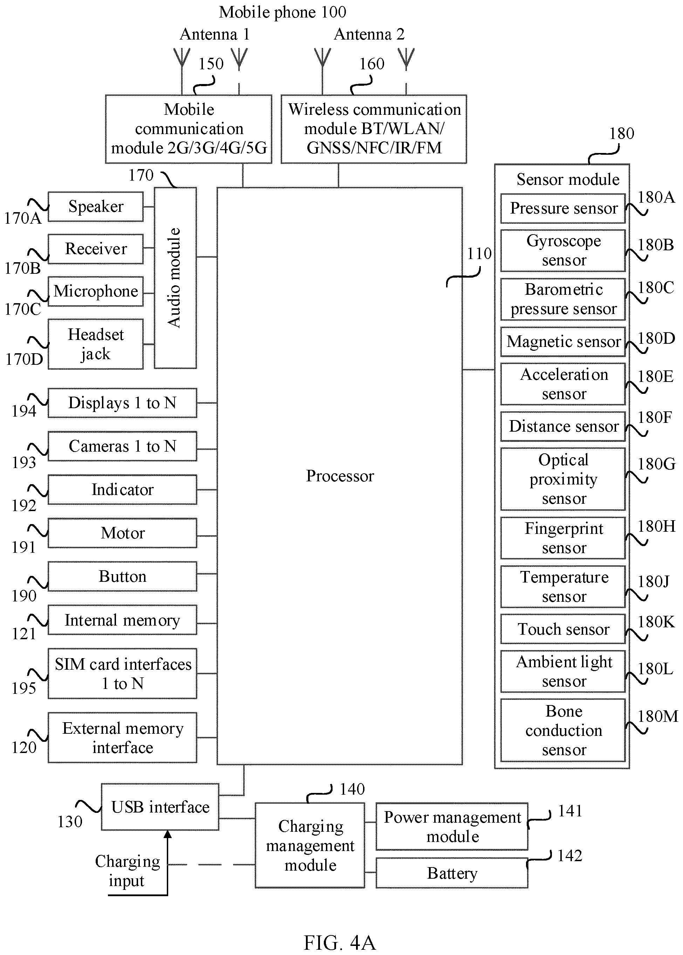

The following describes an electronic device. FIG. 4A is a schematic diagram of a structure of an electronic device 100. The electronic device 100 may be a primary device or a target device. As shown in FIG. 2A, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on instruction operation code and a time sequence signal, to complete control of instruction reading and instruction execution. A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device. The charging management module 140 is configured to receive a charging input from the charger. The power management module 141 is configured to connect the battery 142 and the charging management module 140 to the processor 110. The power management module 141 receives an input from the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, an antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert an amplified signal into an electromagnetic wave through the antenna 1 for radiation. In some embodiments, at least some functional modules in the mobile communication module 150 may be disposed in the processor 110. In some embodiments, at least some functional modules in the mobile communication module 150 and at least some modules of the processor 110 may be disposed in a same component.

The wireless communication module 160 may provide a wireless communication solution that includes a wireless local area network (wireless local area network, WLAN) (such as, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave through the antenna 2 for radiation.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The display 194 is configured to display a display interface of an application, for example, a viewfinder interface of a camera application. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of an image. The ISP may further optimize parameters such as exposure and a color temperature of a photographing scenario. In some embodiments, the ISP may be disposed in the camera 193.

The camera 193 is configured to capture a static image or a video. An optical image of an object is generated through a lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 performs frequency selection, the digital signal processor is configured to perform Fourier transform on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. The NPU can implement applications such as intelligent cognition of the electronic device 100, for example, image recognition, facial recognition, speech recognition, and text understanding.

The internal memory 121 may be configured to store computer-executable program code. The executable program code includes instructions. The processor 110 runs the instructions stored in the internal memory 121 to perform various function applications of the electronic device 100 and data processing. The internal memory 121 may include a program storage area and a data storage area. An operating system, software code of at least one application (for example, an iQIYI application or a WeChat application), and the like may be stored in the program storage area. Data (for example, a photographed image or a recorded video) generated during use of the electronic device 100 may be stored in the data storage area. In addition, the internal memory 121 may include a high-speed random access memory, or may include a nonvolatile memory, for example, at least one magnetic disk storage device, a flash memory, or a universal flash storage (universal flash storage, UFS).

The external memory interface 120 may be configured to connect to an external storage card, for example, a micro-SD card, to extend a storage capability of the electronic device. The external storage card communicates with the processor 110 through the external memory interface 120, to implement a data storage function. For example, files such as a picture or a video is stored in the external storage card.

The electronic device 100 may implement audio functions such as music playing and recording by using the audio module 170, the speaker 170A, the receiver 170B, the microphone 170C, the headset jack 170D, the application processor, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed in the display 194. The gyroscope sensor 180B may be configured to determine a motion posture of the electronic device 100. In some embodiments, angular velocities of the electronic device 100 around three axes (namely, axes x, y, and z) may be determined by using the gyroscope sensor 180B.

The gyroscope sensor 180B may be configured to implement image stabilization during photographing. The barometric pressure sensor 180C is configured to measure barometric pressure. In some embodiments, the electronic device 100 calculates an altitude through the barometric pressure measured by the barometric pressure sensor 180C, to assist in positioning and navigation. The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover by using the magnetic sensor 180D. Further, a feature such as automatic unlocking upon opening of the flip cover is set based on a detected opening or closing state of the flip cover. The acceleration sensor 180E may detect accelerations in various directions (usually on three axes) of the electronic device 100. When the electronic device 100 is stationary, the acceleration sensor 180E may detect a magnitude and a direction of gravity. The acceleration sensor 180E may be further configured to identify a posture of the electronic device 100, and is used in an application such as switching between a landscape mode and a portrait mode or a pedometer.

The distance sensor 180F is configured to measure a distance. The electronic device 100 may measure a distance by infrared or laser light. In some embodiments, in a photographing scenario, the electronic device 100 may measure a distance by using the distance sensor 180F to implement quick focusing. The optical proximity sensor 180G may include, for example, a light-emitting diode (LED) and an optical detector such as a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch. The fingerprint sensor 180H is configured to collect a fingerprint. The electronic device 100 may implement fingerprint unlocking, access to an application lock, fingerprint-based photographing, fingerprint-based call answering, and the like based on features of the collected fingerprint.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being powered off abnormally due to a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may alternatively be disposed on a surface of the electronic device 100, and a location of the touch sensor 180K is different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal.

The button 190 includes a power button, a volume button, and the like. The button 190 may be a mechanical button, or may be a touch button. The electronic device 100 may receive a button input, and generate a button signal input related to user setting and function control of the electronic device 100. The motor 191 may generate a vibration prompt. The motor 191 may be configured to provide an incoming call vibration prompt and a touch vibration feedback. For example, touch operations performed on different applications (for example, a photographing application and an audio playing application) may correspond to different vibration feedback effects. Touch vibration feedback effect may be further customized. The indicator 192 may be an indicator light, and may be configured to indicate a charging state and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device 100.

It may be understood that the components shown in FIG. 4A do not constitute a specific limitation on the electronic device 100. The electronic device may further include more or fewer components than those shown in the figure, or some components may be combined, or some components may be split, or there may be a different component arrangement. In addition, a combination/connection relationship between the components in FIG. 4A may also be adjusted and modified.

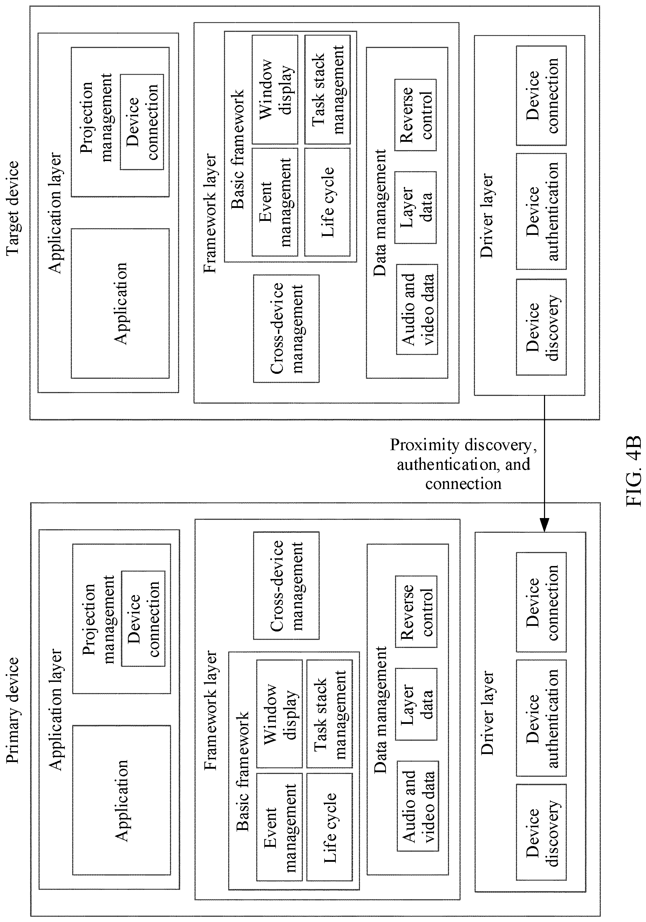

FIG. 4B is a diagram of a software architecture of a projection system according to an embodiment of this application.

A left half part of FIG. 4B is a software architecture diagram of a primary device. The primary device is a device for active projection, for example, may be a mobile phone. A software architecture of the primary device may include an application layer, a framework layer, and a driver layer. It should be noted that more or fewer layers may be included. This is not limited in this embodiment of this application.

The application layer includes an application module and a projection management module. The application module includes various types of applications such as a video playing application and an image shooting application. The projection management module is configured to manage projection. For example, the projection management module includes a device connection module. The device connection module may send, to a cross-device management module at the framework layer, an instruction used to control a connection between the primary device and a target device.

The framework layer includes a basic framework module, the cross-device management module, and a data management module.

The basic framework module includes an event management module, a window display module, a life cycle module, and a task stack management module. The event management module is responsible for sensing an event, for example, receiving an input event reported by the driver layer, for example, an input event used to project a window of an application.

The window display module is configured to manage a display manner of a window of an application, including a coordinate size of a displayed window, a window display level, and the like.

The life cycle module is configured to manage a life cycle of a window. For example, the life cycle module may activate a window through an onResume (onResume) interface, and the activated window is displayed in the foreground. Alternatively, the life cycle module pauses a window through an onPause (onPause) interface, so that the window is switched from the foreground to the background for display. A top-level window (top Activity) in a task stack is used as an example. If the top activity is activated by invoking onResume, the top activity is displayed in the foreground. When a new window is pushed into the task stack and located at an upper layer of the original top activity, the original top activity is paused by invoking onPause, so that the original top activity is switched from the foreground to the background for display. A life cycle of the new window can be managed according to a similar principle.

The task stack management module is configured to create and close a task stack.

The cross-device management module is responsible for controlling the driver layer to implement functions such as proximity discovery, authentication, and connection between the primary device and the target device.

The data management module is responsible for transmitting data streams such as audio, a video, and a layer between the primary device and the target device, and can also be responsible for implementing functions such as controlling a reverse event (namely, an event triggered by the target device to control the primary device).

The driver layer includes a bottom-layer driver, and is responsible for work such as discovery, authentication, and a connection. For example, the driver layer receives a command delivered by the cross-device management module in the framework layer, and performs actions such as the connection and a disconnection. Specifically, the driver layer includes a device discovery module, a device authentication module, and a device connection module. The device discovery module is responsible for device discovery. The device authentication module is responsible for device authentication. The device connection module is responsible for a device connection. Certainly, the driver layer may further include a hardware driver, for example, a display driver

A right half part of FIG. 4B is a software architecture diagram of a target device. The target device is a device, for example, a PC or a television, onto which a screen is projected. A software architecture of the target device may include an application layer, a framework layer, and a driver layer. For functional modules of each layer and functions of the functional modules, refer to the foregoing primary device. In other words, roles of the target device and the primary device are interchangeable, and the target device may also project a screen onto the primary device.

With reference to FIG. 4A and FIG. 4B, the following describes an implementation process of an application window projection method according to an embodiment of this application.

A display of the primary device displays a first window of an application. When receiving hardware interrupt (for example, an operation of the user for opening a second window of the application on a touchscreen), the driver layer of the primary device reports an input event corresponding to the hardware interrupt to the application at the application layer. When it is determined, based on the input event, that the second window of the application is opened, the second window of the application is displayed on the display.

When receiving hardware interrupt (for example, an operation of the user for tapping a projection icon on a touchscreen), the driver layer of the primary device reports an input event corresponding to the hardware interrupt to the application. The application triggers the cross-device management module by using the projection management module at the application layer, so that the cross-device management module sends an instruction to the driver layer, to control the driver layer to implement authentication, a connection, and the like between the primary device and the target device.

After determining that the primary device is successfully connected to the target device, the driver layer of the primary device sends an instruction to the event management module in the basic framework module at the framework layer. The instruction is used to instruct to project the second window of the application. The event management module sends an instruction to the task stack management module, so as to implement stack splitting processing on the second window and the first window by using the task stack management module (specific content is described later). The second window on which stack splitting processing is performed is sent to the target device by using the data management module for display. After the task stack management module completes stack splitting processing on the second window and the first window, the first window is located at the top layer, may be activated by using the life cycle module, and is displayed by using the window display module, that is, the first window is switched from the background to the foreground for display.

The following uses an example in which the primary device is a mobile phone and the target device is a PC or a television, to describe in detail an application window projection method provided in embodiments of this application with reference to the accompanying drawings.

In the application window projection method provided in embodiments of this application, a projection granularity may be each window of an application. For example, an application on the mobile phone includes a plurality of windows. The mobile phone may project at least one window in the plurality of windows onto the PC. Another window in the plurality of windows is displayed on the mobile phone. Specifically, the application window projection method provided in this application includes Embodiment 1 to Embodiment 4.

### Embodiment 1

Embodiment 1 provides an application window projection method. Specifically, a window A of an application is displayed in the foreground of a mobile phone. In response to a user operation, the window A of the application is switched to a window B of the application in the foreground of the mobile phone. In this case, if a user wants to project the window B onto a PC, the user may trigger a projection operation, so that the mobile phone establishes a projection connection to the PC. The mobile phone projects the window B onto the PC. Because the window B is projected, the window B may not be displayed in the foreground of the mobile phone, but another window of the application, for example, the window A, is displayed. In other words, when the window B is projected by the mobile phone, the window B is switched to the window A in the foreground of the mobile phone.

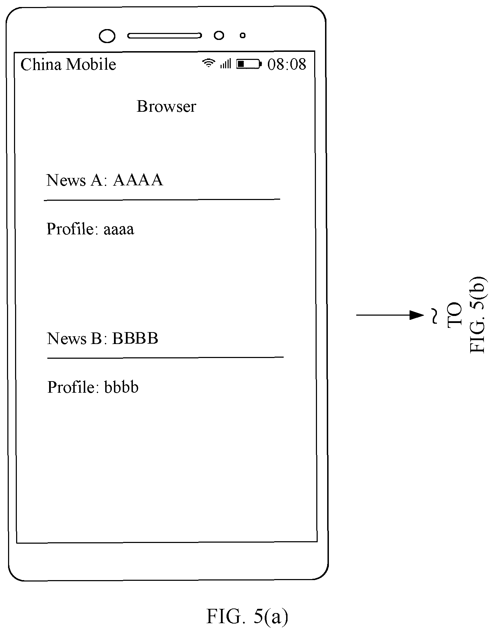

A browser application on the mobile phone is used as an example. FIG. 5(a) to FIG. 5(d) show an example scenario of Embodiment 1.

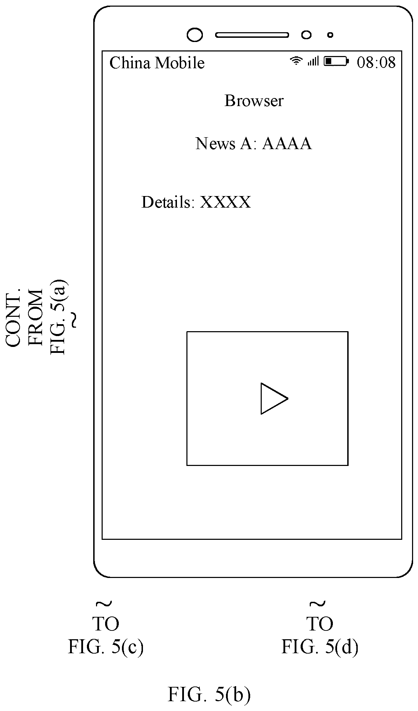

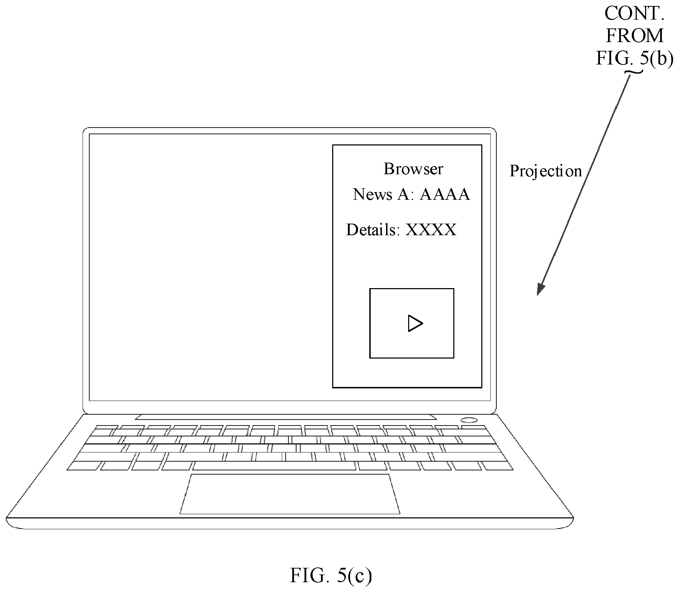

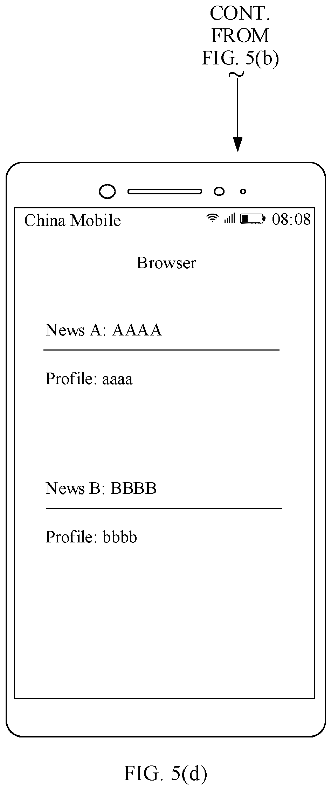

As shown in FIG. 5(a), the user opens the browser application on the mobile phone. The mobile phone displays a home page window of the browser application. The home page window includes an introduction to news A and an introduction to news B. When the mobile phone receives an operation for tapping the news A (for example, an operation for tapping the introduction to the news A in the home page window), the mobile phone displays a window shown in FIG. 5(b), and the window displays the news A (for ease of description, the window is referred to as a window of the news A). In this case, if the user wants to project the news A onto the PC, the user may trigger a projection operation, so that the mobile phone establishes the projection connection to the PC. After the mobile phone projects the window of the news A onto the PC, the PC displays the window of the news A, as shown in FIG. 5(c). After the mobile phone projects the window of the news A, the window of the news A may not be displayed in the foreground, but another window of the browser application is displayed, for example, a window opened before the window of the news A is opened, for example, the home page window of the browser application shown in FIG. 5(d).

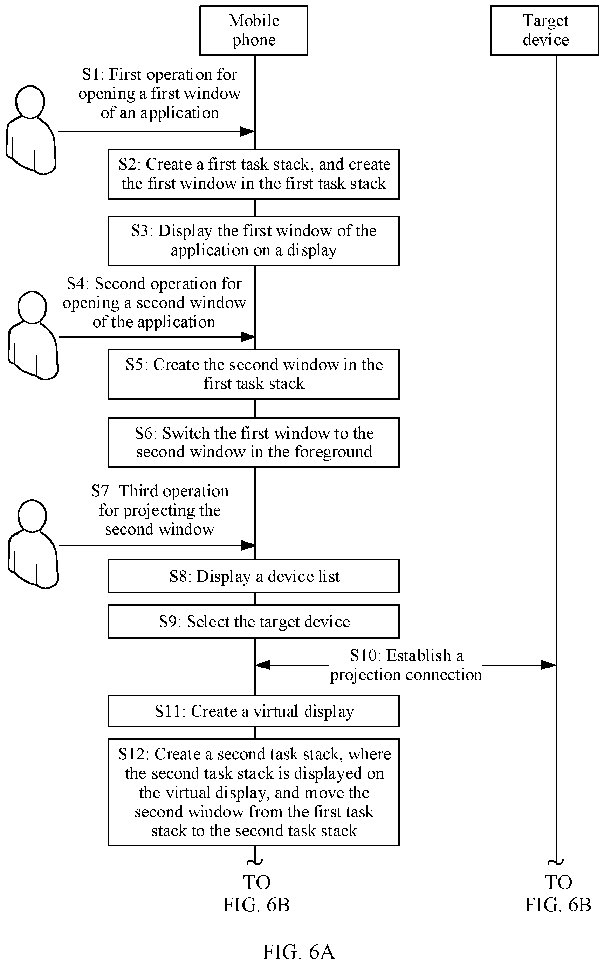

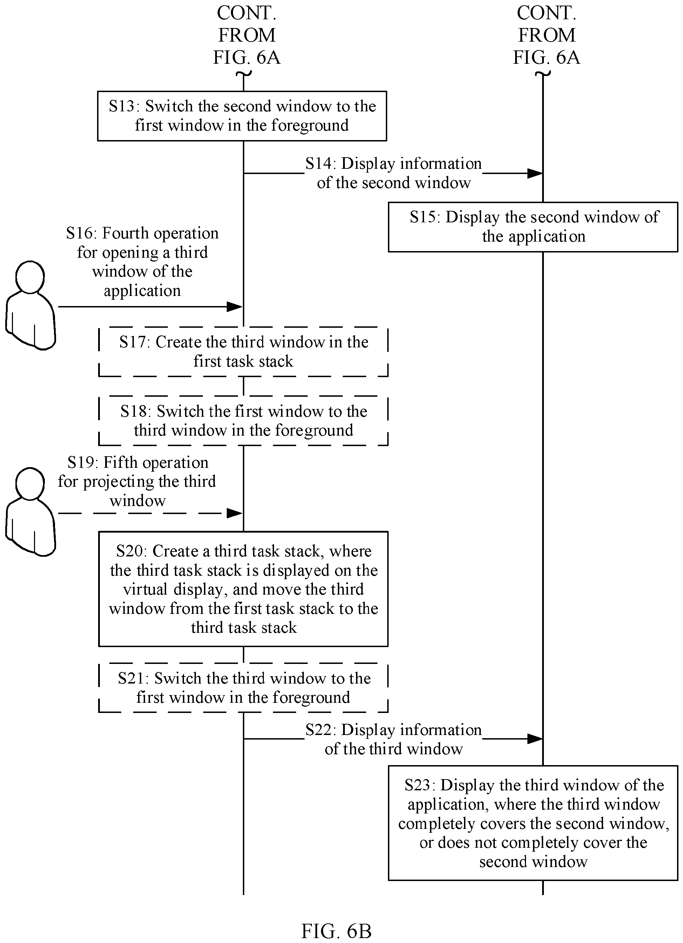

The following uses a flowchart shown in FIG. 6A and FIG. 6B as an example to describe an implementation principle of the application window projection method provided in Embodiment 1.

As shown in FIG. 6A and FIG. 6B, a procedure in Embodiment 1 may include S1 to S15. S1 to S3 describe a process in which the mobile phone opens a first window of the application. If the scenario in FIG. 5(a) to FIG. 5(d) is used as an example, the application may be the browser application, and the first window may be the home page window of the browser application. S4 to S6 describe a process in which the mobile phone opens a second window of the application. If the scenario in FIG. 5(a) to FIG. 5(d) is used as an example, the second window may be the window of the news A. S7 to S15 describe a process in which the mobile phone projects the second window (for example, the window of the news A) of the application onto the PC.

S 1: The mobile phone receives a first operation for opening the first window of the application.

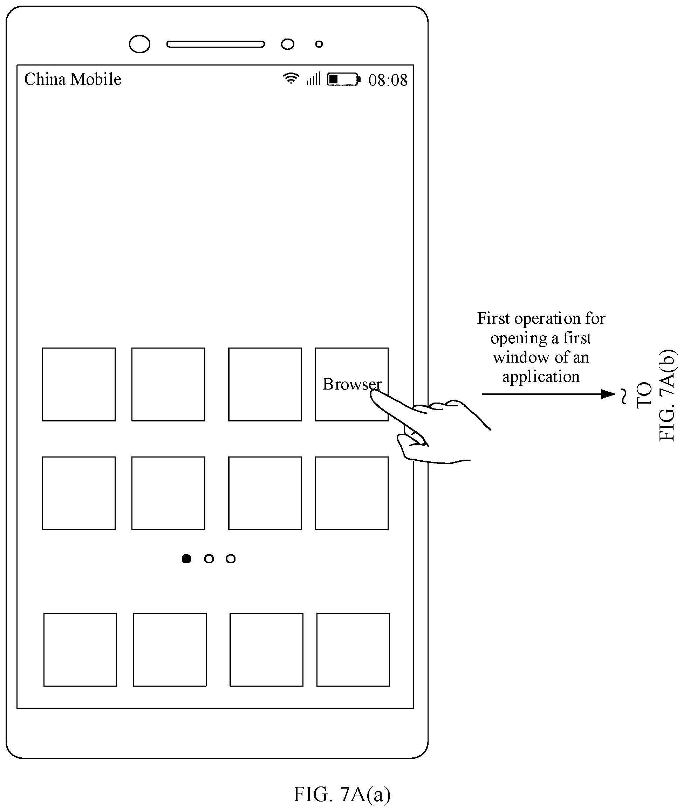

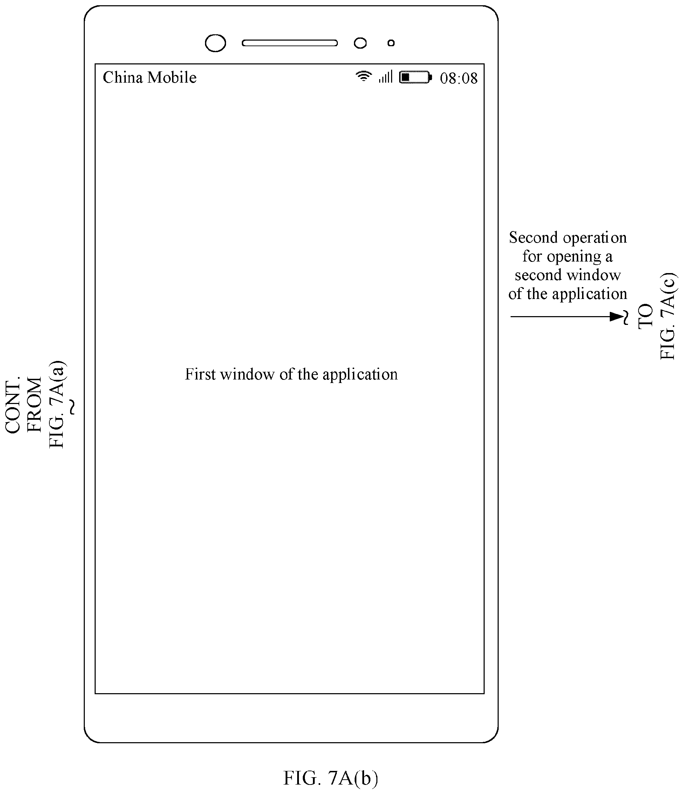

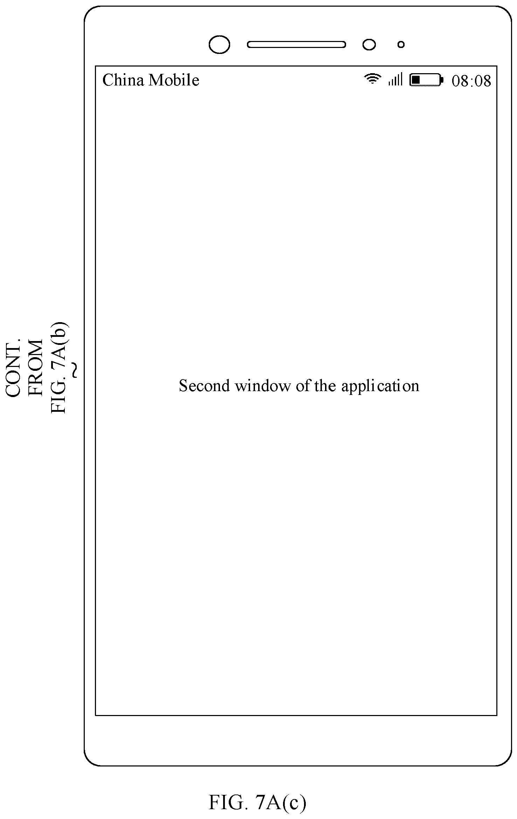

For example, refer to FIG. 7A(a). The mobile phone displays a home screen. The first operation may be an operation for tapping an icon of an application on the home screen. If the application is the browser application, the first operation is an operation for tapping an icon of the browser application on the home screen. Certainly, the first operation may alternatively be another type of operation, for example, a voice instruction used to instruct to open the first window of the application. This is not limited in this embodiment of this application.

S2: The mobile phone creates a first task stack, and creates the first window in the first task stack.

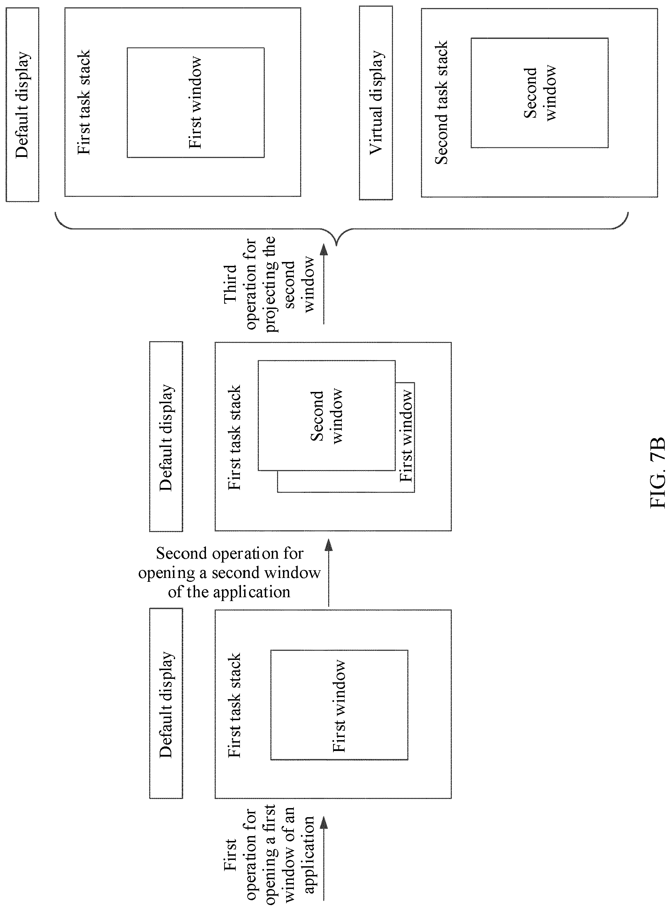

Refer to FIG. 7B. In response to the first operation, the mobile phone creates the first task stack, and creates the first window in the first task stack. The window in the first task stack is displayed on a default display. The default display is a user-visible display area. Because the first window is a window at the top layer in the first task stack, the mobile phone displays the first window on the display, that is, S3 is performed.

S3: The mobile phone displays the first window of the application on the display.

For example, refer to FIG. 7A(b). The mobile phone displays the first window of the application in response to the first operation.

S4: The mobile phone receives a second operation for opening the second window of the application.

FIG. 7A(b) is used as an example. The second operation may be, for example, an operation that is performed on the first window and that is used to open the second window of the application. For example, when the first window is the home page window of the browser application shown in FIG. 5(a), the second operation may be, for example, an operation for tapping the introduction to the news A.

S5: The mobile phone creates the second window in the first task stack.

Still refer to FIG. 7B. In response to the second operation, the mobile phone creates the second window in the first task stack. Because the first window is first pushed into the stack, and the second window is later pushed into the stack, the second window is located at an upper layer of the first window. Generally, a display location of the second window located at the upper layer is the same as that of the first window located at the lower layer. Therefore, the second window completely covers the first window, and the first window is switched to the second window in the foreground of the mobile phone, that is, S6 is performed.

S6: The first window is switched to the second window in the foreground of the mobile phone.

Refer to FIG. 7A(c). In response to the second operation, the mobile phone displays the second window, and no longer displays the first window. If FIG. 5(a) to FIG. 5(d) are used as an example, with reference to FIG. 5(b) and FIG. 5(a), the window (namely, the second window) of the news A completely covers the home page window (namely, the first window) of the browser application.

In this case, if the second window needs to be projected onto a target device, the mobile phone may continue to perform S7 to S15.

S7: The mobile phone receives a third operation for projecting the second window.

The third operation may be an operation for sliding upward from a lower edge of the display, an operation for sliding rightward from a left edge of the display, an operation for sliding leftward from a right edge of the display, an operation for sliding downward from an upper edge of the display, or the like.

Alternatively, the third operation includes an operation for sliding upward from a lower edge of the display and an operation for tapping a projection icon on a slide-up menu (a slide-up menu displayed in response to the operation for sliding upward). Alternatively, the third operation includes an operation for sliding downward from a status bar on the top of the screen of the mobile phone, and an operation for tapping a "wireless projection" icon on a notification panel (a notification panel displayed in response to the operation for sliding downward).

Alternatively, the third operation may be an operation for opening a multi-device control center, for example, an operation for sliding vertically upward from a lower left edge or a lower right edge of the mobile phone, to open the multi-device control center. The multi-device control center displays an icon of at least one device onto which a screen can be projected, so that the user can select the target device.

The foregoing is an example of the third operation, but does not constitute a limitation on the third operation. Alternatively, the third operation may be another type of operation, for example, a voice instruction used to project the second window. Specific examples are not provided one by one in this embodiment of this application.

If the mobile phone currently does not establish a projection connection to the target device, the mobile phone may first connect to the target device, and then project the second window onto the target device. A process of connecting the mobile phone to the target device includes S8 to S10.

S8: The mobile phone displays a device list.

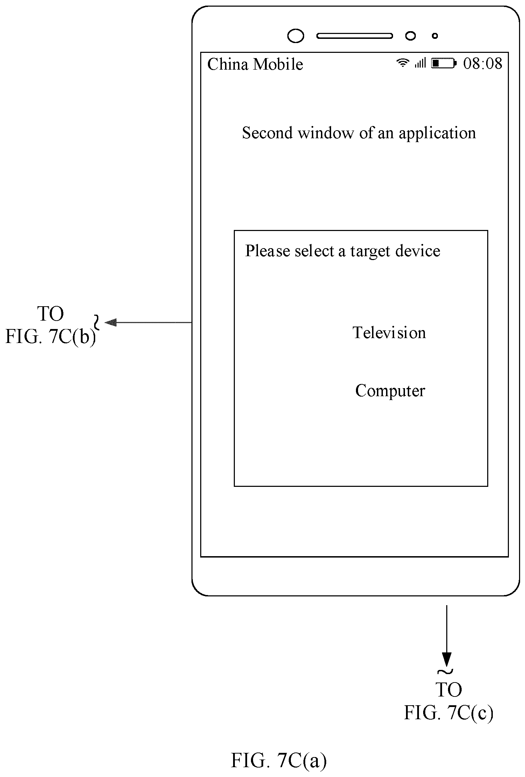

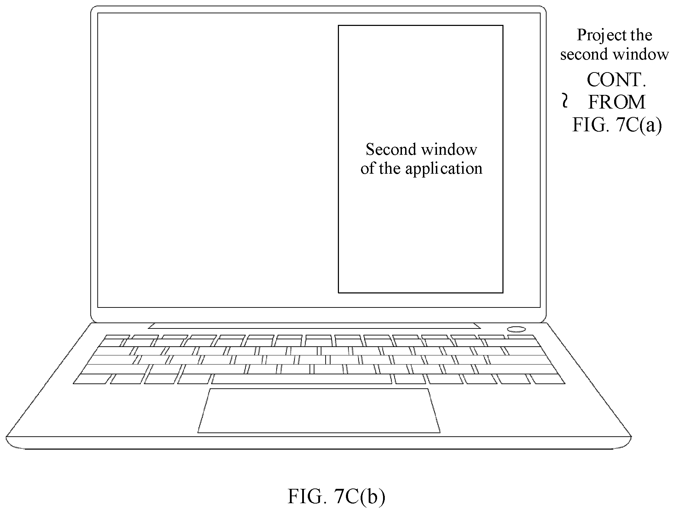

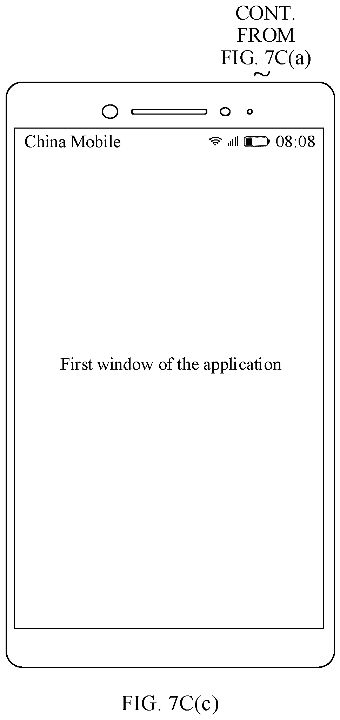

FIG. 7A(c) is still used as an example. When the second window is displayed on the mobile phone, it is assumed that the mobile phone detects the third operation, and may display the device list, as shown in FIG. 7C(a). The device list may include a device identifier. The device identifier may be a device icon such as a television icon or a PC icon, and may further include a device model, so as to facilitate differentiation by the user. If the third operation is an operation for opening the multi-device control center, the device list herein is the multi-device control center.

S9: The mobile phone selects the target device.

For example, the mobile phone receives a tapping operation on an icon of a device in the device list. In response to the tapping operation, the mobile phone determines that a device corresponding to the tapped icon is the target device.

S10: The mobile phone establishes the projection connection to the target device.

In the foregoing example, when detecting the third operation, the mobile phone opens the device list, selects the target device from the device list, and connects to the target device. Optionally, in addition to the foregoing manner, there may be another manner for establishing the connection to the target device. For example, a connection through a QR code may be used. For example, a multi-screen collaboration interface on the mobile phone is opened, the connection through a QR code is tapped on the multi-screen collaboration interface, and a QR code on the PC is scanned to complete the connection. For another example, a "OneHop" connection may be alternatively used. For example, an NFC function on the mobile phone is enabled, and an NFC area on the mobile phone is enabled to touch an NFC area on a keyboard of the PC, to establish a near field communication connection between the mobile phone and the PC. For another example, a proximity connection may alternatively be enabled. For example, a proximity connection function on the PC is enabled. After a Bluetooth function on the mobile phone is enabled, when the mobile phone approaches the PC, the PC finds the mobile phone, and displays prompt information for confirming whether to connect to the mobile phone. When receiving a confirmation instruction, the PC completes a connection to the mobile phone.

The mobile phone may perform stack splitting processing on the first window and the second window of the application. The second window on which stack splitting processing is performed is projected onto the target device. Specifically, this may be implemented by using the following steps S11 to S15.

S11: The mobile phone creates a virtual display.

The virtual display is relative to a real display (visible to the user) of the mobile phone. The virtual display is invisible to the user. The virtual display may include various display parameters such as a resolution and a display size. The display parameter of the virtual display may be consistent with that of the real display of the mobile phone. Alternatively, after a primary device establishes a projection connection to the target device, an objective of creating the virtual display is to enable a window in the virtual display to be displayed on a display of the target device. Therefore, a display parameter of the virtual display may be consistent with that of the display of the target device. For example, a size of the virtual display is consistent with that of the display of the target device. In this case, content displayed on the virtual display is suitable for the display of the target device.

S12: The mobile phone creates a second task stack. The second task stack is displayed on the virtual display. The mobile phone moves the second window from the first task stack to the second task stack.

A sequence of performing S11 and S 12 is not limited. For example, S 11 may be performed before S12, that is, the virtual display is created after a connection to the target device is established. Alternatively, S12 may be performed before S11.

That the second window is moved from the original first task stack to the second task stack specifically includes: creating the second task stack, creating the second window in the second task stack, and then closing the second window in the first task stack. As shown in FIG. 7B, the second window is moved from the original first task stack to the second task stack in response to the third operation. Because the second window is moved from the first task stack, and the first window is located at the top layer, the second window is switched to the first window in the foreground of the mobile phone, that is, S13 is performed.

S13: The second window is switched to the first window in the foreground of the mobile phone.

S14: The mobile phone sends display information of the second window in the second task stack to the target device.

S15: The target device displays the second window of the application.

It should be noted that a sequence of performing S13 to S15 is not limited. For example, S13 and S14 may be performed simultaneously.

For example, refer to FIG. 7C(a). It is assumed that the mobile phone determines that the target device is the PC. The mobile phone establishes the connection to the PC, and sends the display information of the second window to the PC. The PC displays the second window, as shown in FIG. 7C(b). In addition, the mobile phone switches the second window to the first window in the foreground, as shown in FIG. 7C(c).

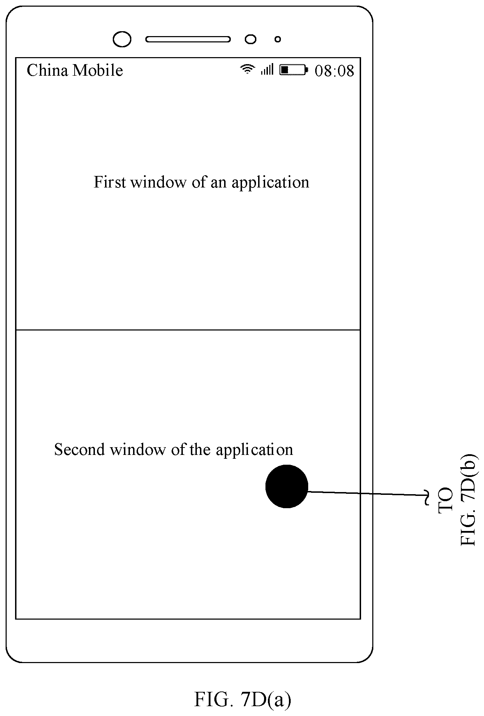

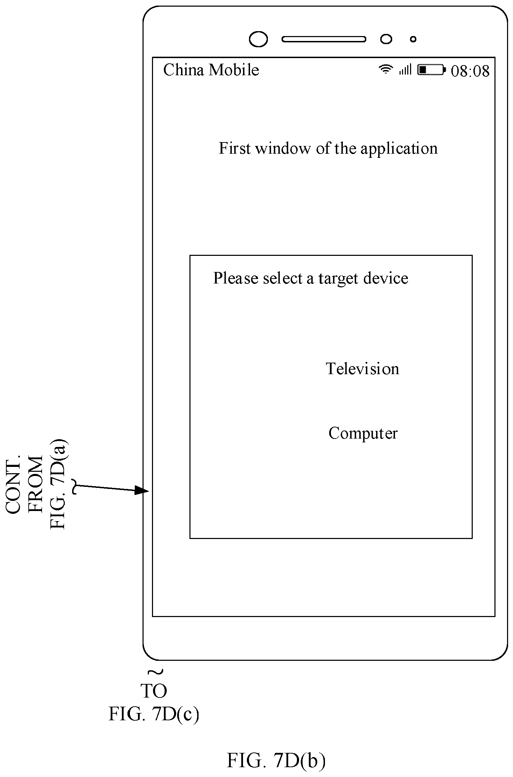

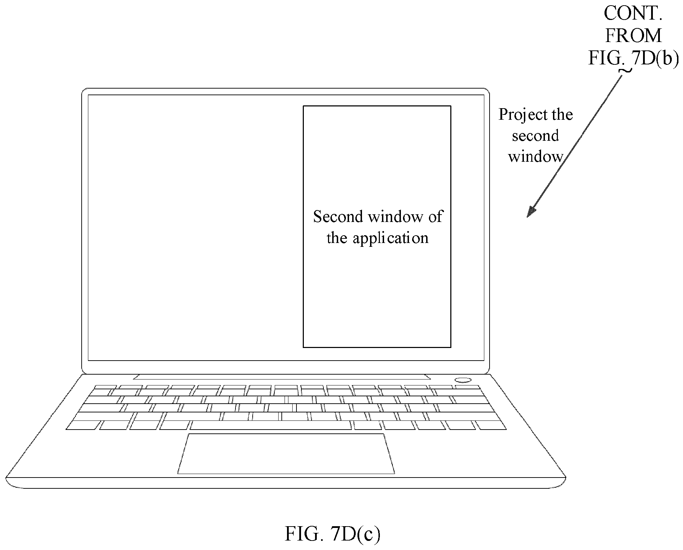

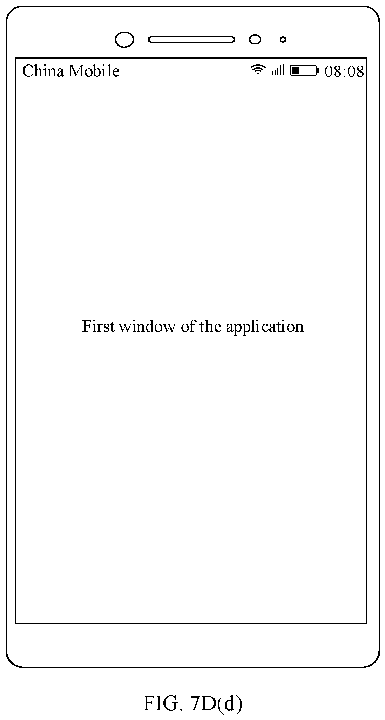

It should be noted that, in the foregoing embodiment, an example in which the second window completely covers the first window when the mobile phone opens the second window is used for description. It may be understood that a display location of the second window may be different from a display location of the first window. For example, the second window and the first window are displayed in split screens, as shown in FIG. 7D(a). In this case, the user may choose to project the first window or the second window onto the PC. For example, the second window is projected. After detecting the third operation for projecting the second window, the mobile phone performs S8 to S15 to complete a process of projecting the second window.

It should be noted that, in the case of split-screen display, to facilitate the mobile phone to distinguish which window the user wants to project, when detecting that the first window is selected, the mobile phone determines that the user wants to project the first window, and when detecting that the second window is selected, the mobile phone determines that the user wants to project the second window. An operation for selecting a window may be tapping a window twice, tapping a window for three consecutive times, touching and holding a window, or the like. For example, still refer to FIG. 7D(a). When detecting a touch and hold operation on the second window, the mobile phone displays the device list, as shown in FIG. 7D(b). When the mobile phone detects that the user selects the PC, the mobile phone establishes the connection to the PC, and projects the second window onto the PC, as shown in FIG. 7D(c). In this case, the first window is displayed in full screen in the foreground of the mobile phone, as shown in FIG. 7D(d).

In the foregoing embodiment, when the second window is projected, the second window is switched to the first window in the foreground of the mobile phone. The first window is a previous window opened before the second window is opened. It may be understood that, when the second window is projected, another window of the application, for example, a default window, may further be displayed in the foreground of the mobile phone. The default window may be, for example, a home page window of the application, or a window specified by the user.

To sum up, in Embodiment 1, when the mobile phone displays a window of an application, in response to a projection operation of the user, after completing a projection connection to the PC, the mobile phone projects a window displayed in the foreground of the mobile phone onto the PC, and another window of the application is displayed in the foreground of the mobile phone. That is, a projection granularity is the window of the application.

### Embodiment 2

Embodiment 2 provides an application window projection method. Specifically, when the mobile phone establishes the projection connection to the target device, and the mobile phone detects an operation for opening a window C of the application, the window C is displayed on the mobile phone. When an operation for projecting the window C is detected, the window C is projected onto the target device. For ease of description, in Embodiment 2, an example in which the mobile phone currently establishes the projection connection to only one target device (for example, the PC) is used for description.

The following describes an example scenario of Embodiment 2.

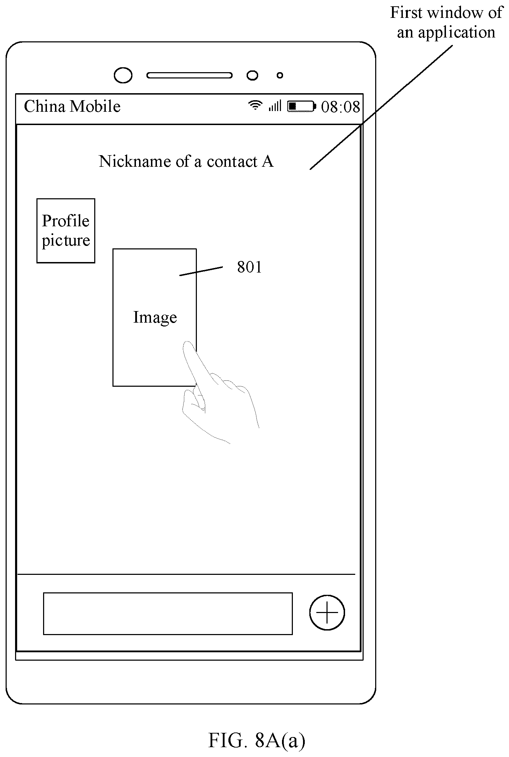

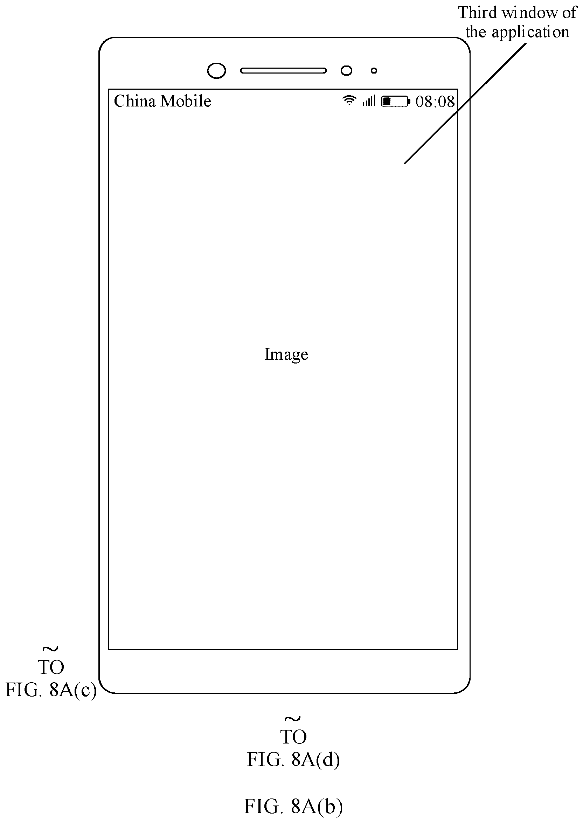

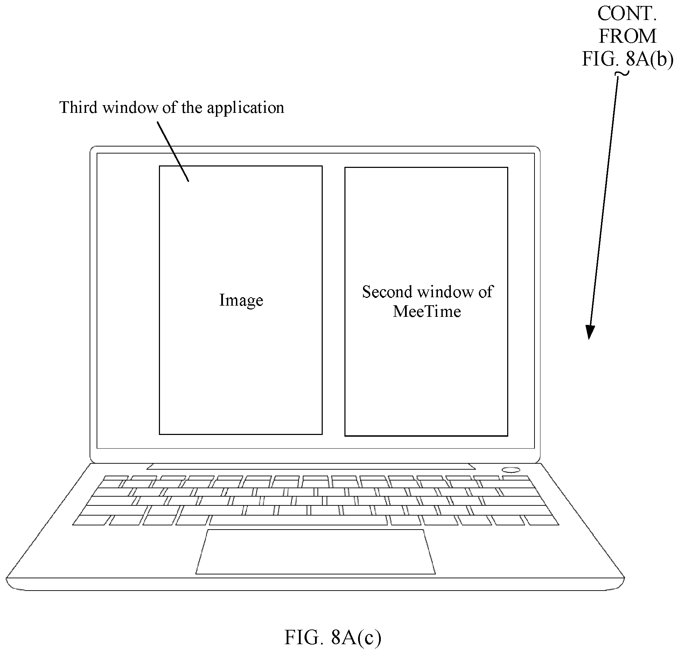

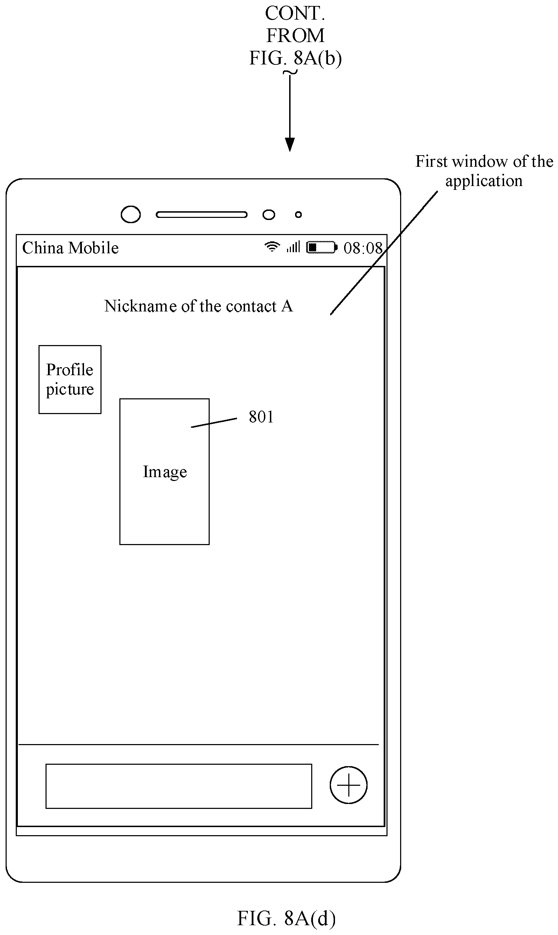

It is assumed that the mobile phone establishes the projection connection to the PC, projects the second window of the application (for example, a MeeTime application) displayed in the foreground of the mobile phone onto the PC, and displays the first window of the application (for example, the MeeTime application). For example, the first window is a chat window for chatting with a contact A in the MeeTime application. Refer to FIG. 8A(a). The first window includes an image 801 sent by the contact A. In this case, if the mobile phone detects an operation for tapping the image 801 by the user, the mobile phone displays a third window. As shown in FIG. 8A(b), the image 801 is enlarged and displayed. When detecting an operation for projecting the third window, the mobile phone projects the image 801 onto the PC for display, as shown in FIG. 8A(c). In this case, the mobile phone may switch back to the first window, as shown in FIG. 8A(d).

The following uses FIG. 6A and FIG. 6B as an example to describe an implementation principle of Embodiment 2. Specifically, a procedure in Embodiment 2 may include steps S1 to S23 in FIG. 6A and FIG. 6B, or include only S10, S16, and S23. The following uses S1 to S23 as an example for description. For descriptions of S1 to S 15, refer to Embodiment 1.

S16: The mobile phone detects a fourth operation for opening the third window of the application.

For an implementation of the fourth operation, refer to the description of the implementation of the second operation in Embodiment 1. Details are not described again.

S17: The mobile phone creates the third window in the first task stack.

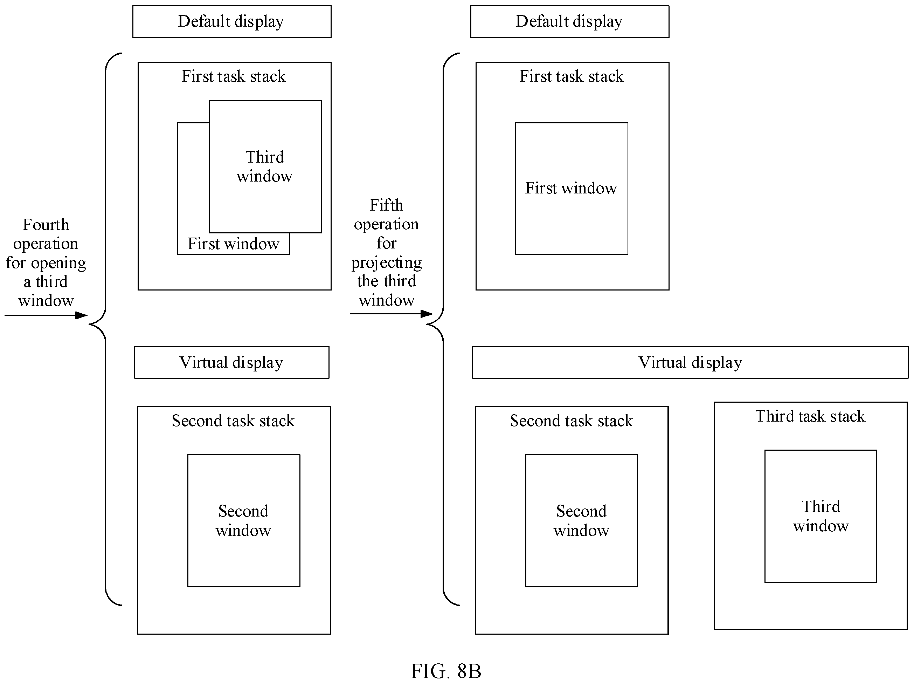

Refer to FIG. 8B. When the first task stack already includes the first window, in response to the fourth operation, the mobile phone creates the third window in the first task stack, and the third window covers the first window. Therefore, the first window is switched to the third window in the foreground of the mobile phone, that is, S 18 is performed.

S18: The first window is switched to the third window in the foreground of the mobile phone.

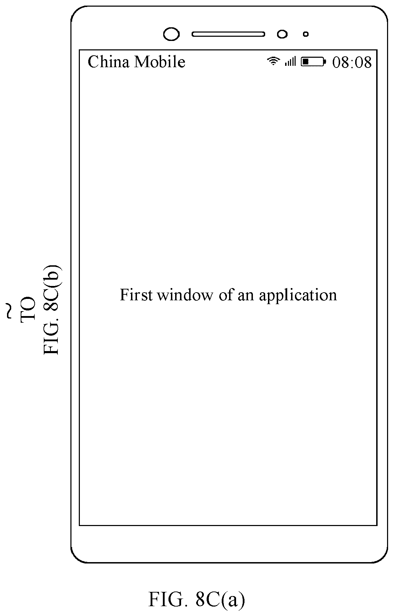

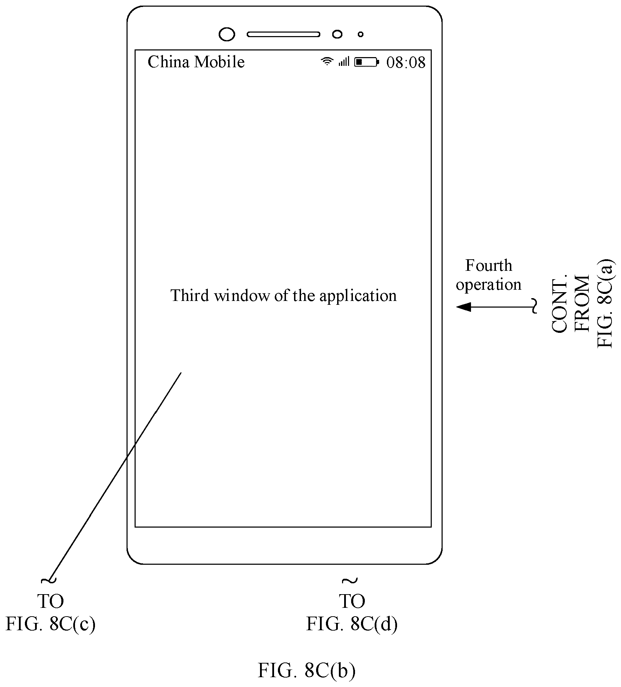

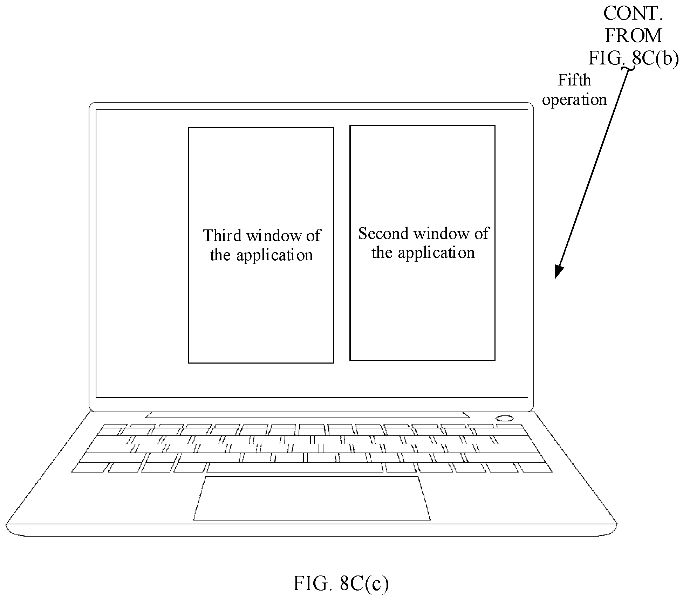

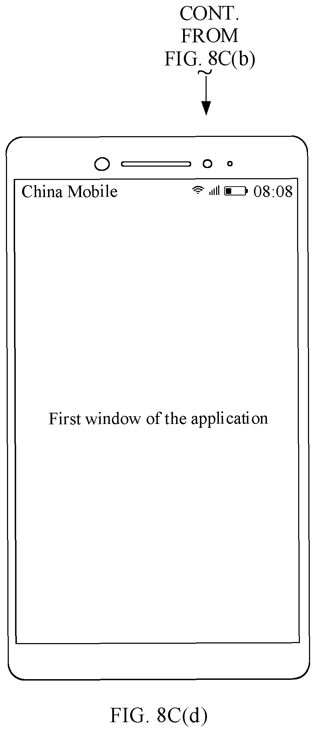

For example, refer to FIG. 8C(a). In response to the fourth operation, the mobile phone switches the first window to the third window, as shown in FIG. 8C(b).

S19: The mobile phone detects a fifth operation for projecting the third window.

For example, the fifth operation may be a hold and drag operation on the third window. Alternatively, the fifth operation may be a hold and drag operation on the third window, and the drag operation ends at an upper/lower/left/right edge of the display. Alternatively, the fifth operation is an operation for tapping an icon of a target device in a multi-device center.

S20: The mobile phone creates a third task stack. The third task stack is displayed on the virtual display. The mobile phone moves the third window from the first task stack to the third task stack.

Refer to FIG. 8B. In response to the fifth operation, the third window is moved from the first task stack to the third task stack. Specifically, the mobile phone creates the third task stack, creates the third window in the third task stack, and closes the third window in the first task stack. Therefore, the third window is switched to the first window in the foreground of the mobile phone, that is, S21 is performed.

S21: The third window is switched to the first window in the foreground of the mobile phone.

S22: The mobile phone sends display information of the third window to the target device.

S24: The target device displays the third window.

Refer to FIG. 8C(b). In response to the fifth operation, the mobile phone projects the third window onto the PC, and the PC displays the third window, as shown in FIG. 8C(c). In this case, the third window is switched to the first window in the foreground of the mobile phone, as shown in FIG. 8C(d).

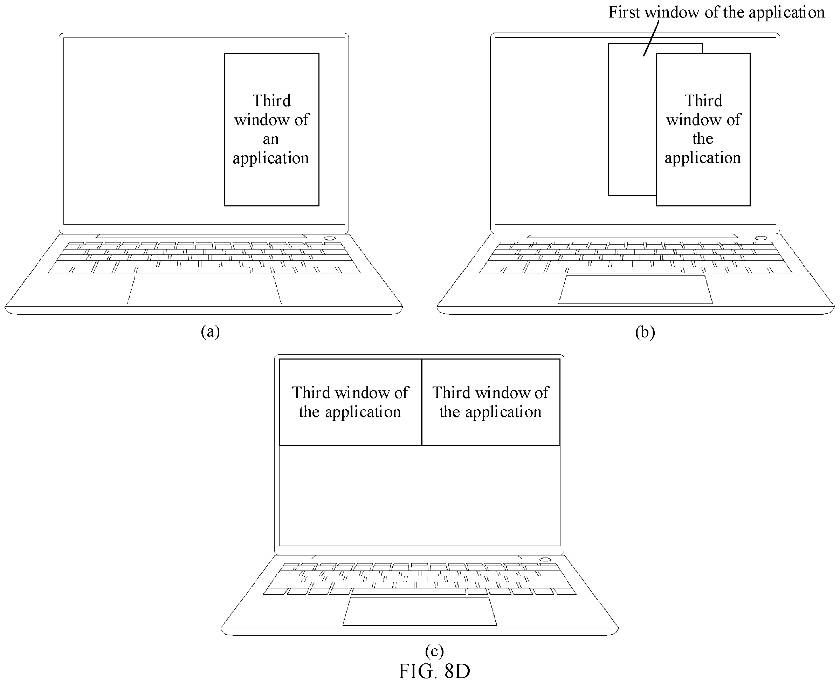

Because the mobile phone projects the second window before the third window, the PC includes two windows projected by the mobile phone. For example, as shown in FIG. 8C(c), the second window and the third window are displayed vertically on the PC. It may be understood that the second window and the third window may alternatively be displayed in another manner. For example, as shown in (a) in FIG. 8D, the third window completely covers the second window. Alternatively, as shown in (b) in FIG. 8D, the third window covers a part of the second window. Alternatively, as shown in (c) in FIG. 8D, the second window and the third window are displayed horizontally.

In the foregoing example, an example in which the mobile phone establishes the projection connection to only one target device (namely, the PC) is used for description. Therefore, in the example of FIG. 8C(a), FIG. 8C(b), FIG.8C(c), and FIG. 8C(d), when the mobile phone detects the fifth operation for projecting the third window, (for example, the hold and drag operation on the third window), the third window is projected onto the PC by default. Alternatively, each time the mobile phone detects an operation (for example, the fifth operation) for projecting a window, the mobile phone may display the device list, so that the user can select the target device. If FIG. 8C(a), FIG. 8C(b), FIG. 8C(c), and FIG. 8C(d) are still used as an example, when detecting the fifth operation for projecting the third window, the mobile phone does not directly project the third window onto the PC, but displays the device list, and selects the target device from the device list. If the selected target device is the PC, because the mobile phone establishes the projection connection to the PC, the mobile phone may directly project the third window onto the PC without performing a process of connecting to the PC. If the target device selected by the user is a television, and the mobile phone does not establish a projection connection to the television, the mobile phone establishes the projection connection to the television, and then projects the third window onto the television.

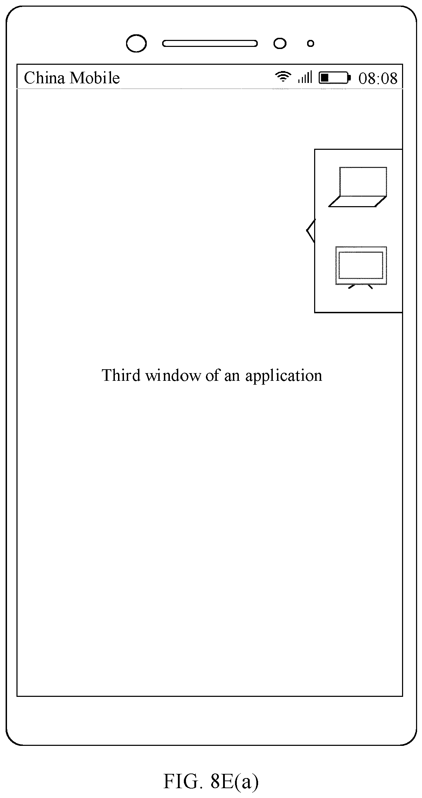

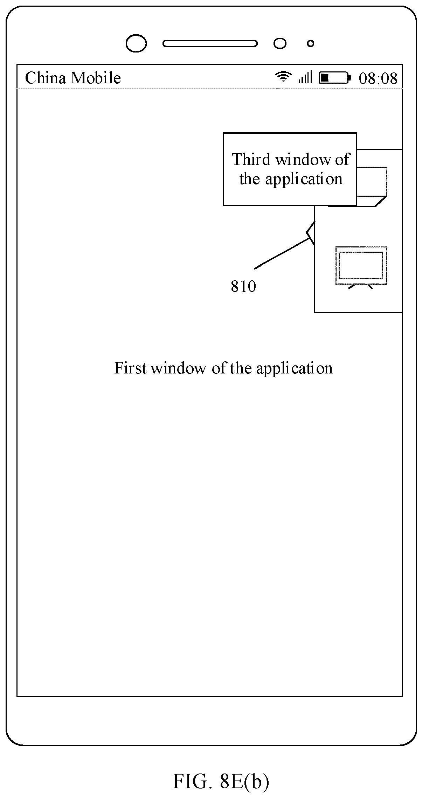

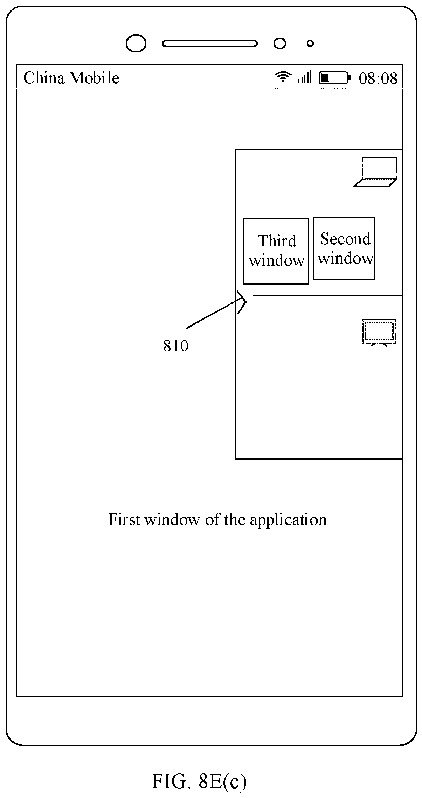

Because there may be more than one target device currently connected to the mobile phone, when detecting an operation for projecting a window, the mobile phone needs to determine a target device onto which the window is projected. For example, refer to FIG. 8E(a). The mobile phone displays the third window of the application, and displays icons of all currently connected target devices. As shown in FIG. 8E(b), when detecting that the third window is held and dragged to an icon corresponding to the PC, the mobile phone projects the third window onto the PC. Alternatively, when detecting that the third window is held and dragged to an icon corresponding to the television, the mobile phone projects the third window onto the television. Optionally, the mobile phone may further display a window projected onto each target device. It is assumed that the second window and the third window of the application are projected onto the PC. Still refer to FIG. 8E(b). When detecting an operation for tapping a button 810, the mobile phone may be as shown in FIG. 8E(c). A marker of the second window and a marker of the third window are displayed at corresponding icons of the PC, to indicate that the second window and the third window are projected onto the PC. To facilitate identification by the user, a marker of a window may be a scaled-down version of the window.

When the mobile phone establishes a projection connection to a first target device, the mobile phone may also project the window onto a second target device that is not connected to the mobile phone. For example, when detecting an operation for invoking the device list, the mobile phone displays the device list. The device list includes a target device that is currently not connected, for selection by the user. The operation for invoking the device list may be, for example, the third operation in Embodiment 1. Details are not repeated herein.

### Embodiment 3

In Embodiment 2, when the mobile phone establishes the projection connection to the target device, and the mobile phone detects the operation for opening the window C of the application, the window C is displayed on the mobile phone. When the operation for projecting the window C is detected, the window C is projected onto the target device. Different from Embodiment 2, in Embodiment 3, when the mobile phone establishes the projection connection to the target device, and the mobile phone detects the operation for opening the window C of the application, the mobile phone may not open the window C, but directly project the window C onto the target device for display.

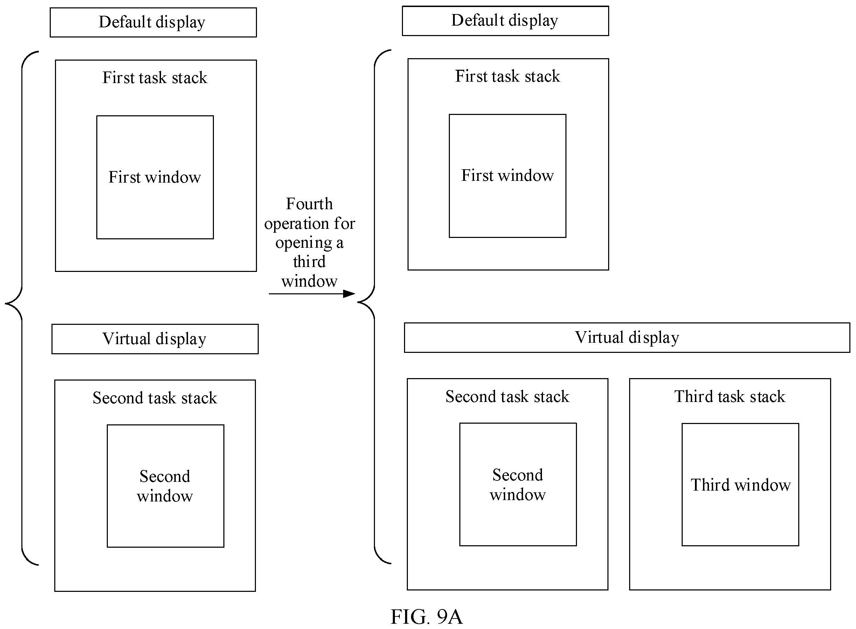

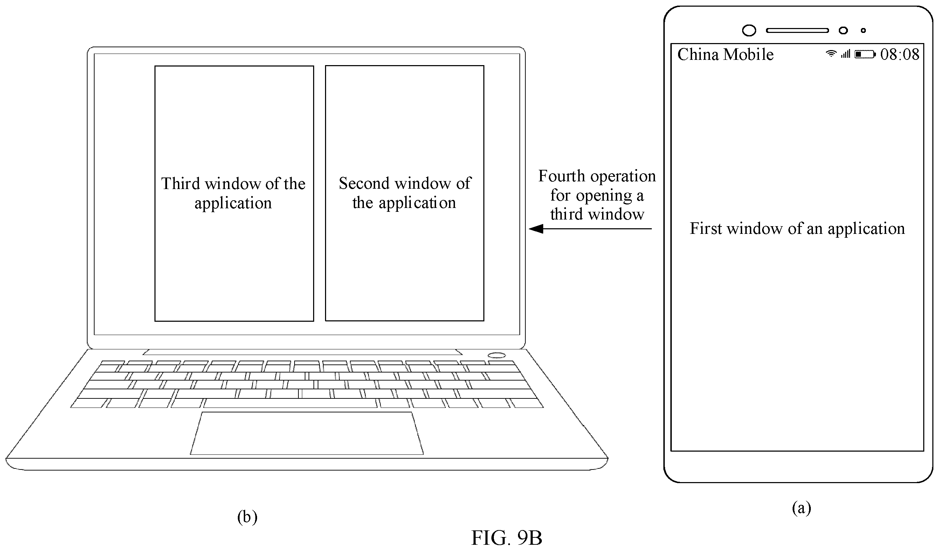

The following uses FIG. 6A and FIG. 6B as an example to describe an implementation principle of Embodiment 3. Specifically, a procedure in Embodiment 3 may include steps S1 to S 16, S20, and S22 to S23 in FIG. 6A and FIG. 6B. In other words, compared with Embodiment 2, steps S17 to S19 and S21 are omitted in Embodiment 3. In other words, after the mobile phone establishes the projection connection to the target device, in response to the fourth operation for opening the third window, the mobile phone does not create the third window in the first task stack, but directly creates the third window in the third task stack different from the first task stack. Refer to FIG. 9A. The first task stack already includes the first window, and the second task stack already includes the second window (that is, the second window is projected onto the PC). In response to the fourth operation, the mobile phone creates the third task stack, and creates the third window in the third task stack. The third task stack is displayed on the virtual display. Because the third window is not created in the first task stack, the third window is not opened in the foreground of the mobile phone. For example, refer to (a) in FIG. 9B. The first window is displayed in the foreground of the mobile phone. When the mobile phone detects the fourth operation for opening the third window, the mobile phone projects the third window onto the PC. As shown in (b) in FIG. 9B, the first window is still displayed in the foreground of the mobile phone.

The following describes an example scenario of Embodiment 3.

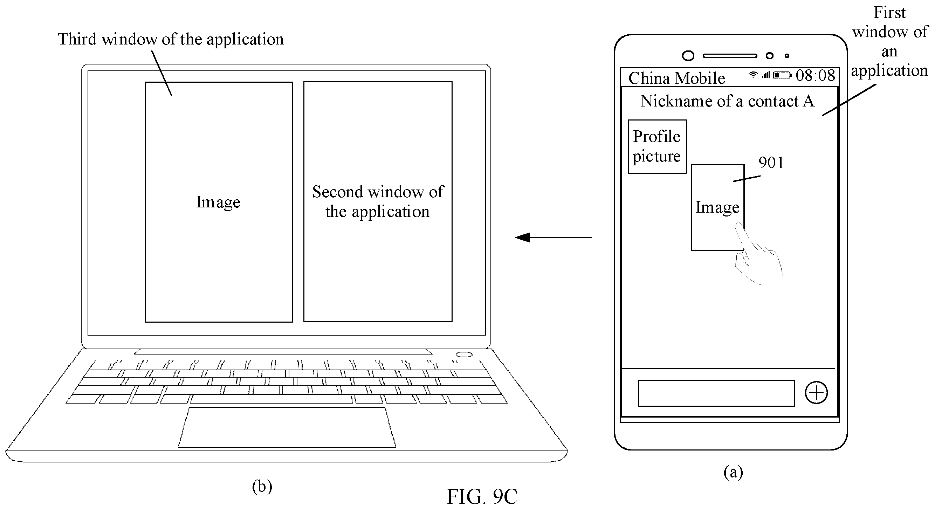

It is assumed that the mobile phone establishes the projection connection to the PC, projects the second window of the application (for example, the MeeTime application) displayed in the foreground of the mobile phone onto the PC, and displays the first window of the application (for example, the MeeTime application). For example, the first window is the chat window for chatting with the contact A. Refer to (a) in FIG. 9C. The first window includes an image 901 sent by the contact A. In this case, if the mobile phone detects an operation (namely, the fourth operation) for tapping the image 901 by the user, the mobile phone may project the image onto the PC for display, that is, the third window in (b) in FIG. 9C, but the image 901 is not enlarged and displayed on the mobile phone.

It should be noted that an example in which the mobile phone projects the image onto the target device for display when detecting that the user wants to open an image is used in FIG. 9C. It may be understood that another scenario is also applicable. For example, a mobile phone displays a home page window of a browser application. The home page window includes a video. When the mobile phone detects an operation for playing the video, the video is projected onto a target device for display, and may not be opened on the mobile phone.

Optionally, if a projection manner in Embodiment 2 is used as a first projection manner, and a projection manner in Embodiment 3 is used as a second projection manner, the mobile phone may use the first projection manner or the second projection manner by default. Certainly, the user may also select a projection manner. For example, a projection mode switching button is set on the mobile phone, and switching between the first projection mode and the second projection mode is implemented by using the button.

### Embodiment 4

In addition to the first projection manner and the second projection manner, Embodiment 4 provides a third projection manner. Different from the first projection manner and the second projection manner, in the third projection manner, the mobile phone may display a candidate window of the application. There may be a plurality of candidate windows, so that the user selects a to-be-projected window.

The candidate window may be all windows opened after the application is started. The browser application is used as an example. After the browser application is started, the home page window, the window of the news A, and the window of the news B are opened. In this case, the candidate window includes the three windows.

Alternatively, the candidate window may be a preset fixed window. A phone application is used as an example. The candidate window may include a "Contacts" window, a "Calls" window, a "Dialer" window, and a "MeeTime" window.

Alternatively, the candidate window may be a window specified by the user. The MeeTime application is used as an example. The user may set a chat window for chatting with a contact as the candidate window, and may further specify a group chat window as the candidate window.

It should be noted that the foregoing is an example of the candidate window, and the candidate window may alternatively be set in another manner. For example, the candidate window may be a window that is of the application and whose opening frequency is greater than a preset frequency and times of opening is greater than a preset quantity of times, a window that is of the application and whose foreground running duration is longer than preset duration, or the like. Examples are not provided one by one in this embodiment of this application.

Optionally, candidate windows of each application may be different. The candidate windows of each application may be the windows enumerated above.

A manner of displaying the candidate window of the application by the mobile phone may be: displaying the candidate window of the application when a preset operation for invoking the candidate window of the application is detected.

An operation type of the preset operation is not limited in this application. For example, the preset operation may be double tapping or holding down a home button, may be an operation for sliding upward from a lower part of a screen and pausing to enter a multitask management interface, where the multitask management interface includes the candidate window, or may be double tapping or holding down the projection icon (for example, in a pull-up menu). Alternatively, after the mobile phone establishes a connection to the target device, a candidate window button is displayed in the foreground of the mobile phone, and the candidate window is invoked when a tap operation on the button is detected.

It may be understood that, when a window of an application A is displayed in the foreground of the mobile phone, a candidate window of the application A or a candidate window of each of all currently running applications (for example, the application A and an application B) may be invoked by using the foregoing preset operation.

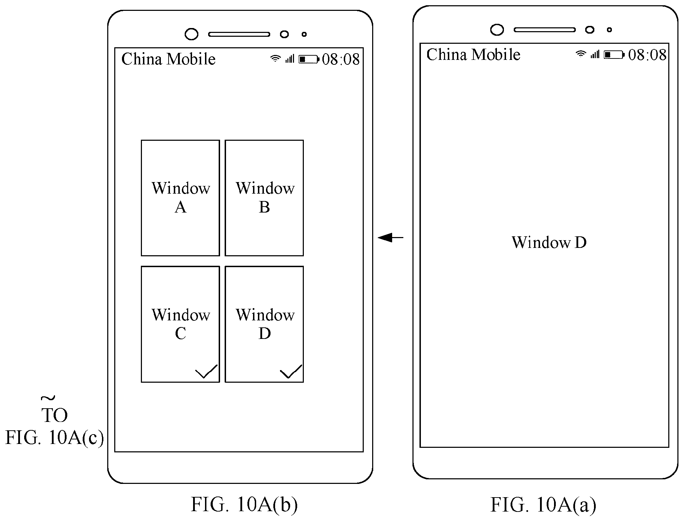

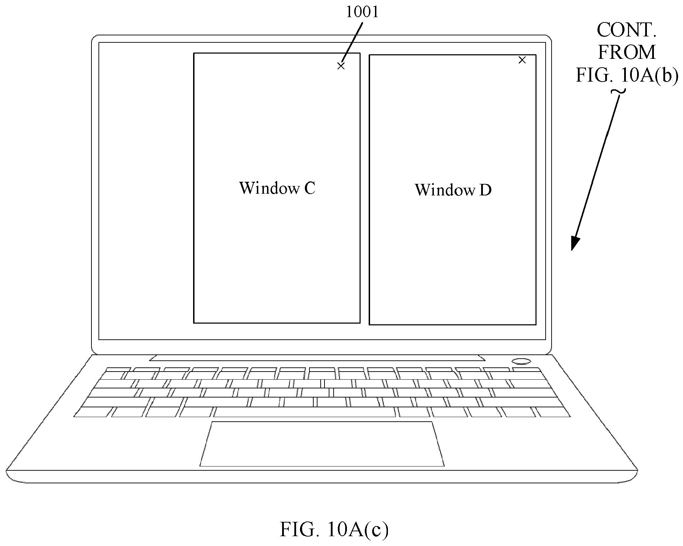

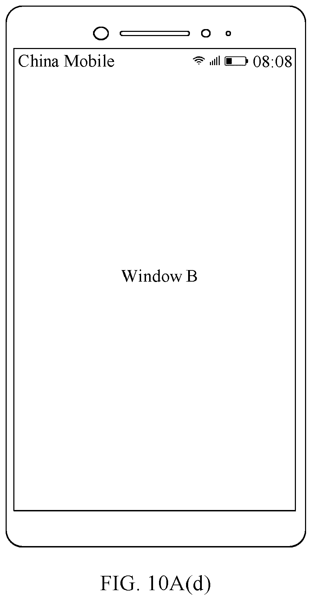

For example, refer to FIG. 10A(a). A window D of the application is displayed in the foreground of the mobile phone. When detecting the preset operation, the mobile phone displays the interface shown in FIG. 10A(b) in response to the preset operation. The interface includes the candidate window of the application, and the candidate window includes the window A to the window D of the application. It is assumed that the mobile phone detects that the user selects the window C and the window D, and the mobile phone projects the window C and the window D onto the PC. Refer to FIG. 10A(c). In this case, the window A or the window B is displayed in the foreground of the mobile phone. For example, if the window B is on an upper layer of the window A, the window B is displayed, as shown in FIG. 10A(d).

Optionally, in FIG. 10A(b), the window A to the window D may be snapshots of the windows. For example, each time a window is opened on the mobile phone, a snapshot of the window is stored. For example, the snapshot of the window is stored in SurfaceFlinger. Therefore, a large quantity of snapshots of windows of a plurality of applications are stored in SurfaceFlinger. To facilitate SurfaceFlinger to distinguish snapshots of different windows, a unique identifier may be set for a snapshot of each window. There is a correspondence between the unique identifier and an activity handle of the window. Therefore, when the window D of the application is displayed in the foreground of the mobile phone, when detecting the foregoing preset operation, the mobile phone obtains the window snapshot of each window from SurfaceFlinger based on the activity handle of each window of the application and the correspondence, and displays the window snapshot.

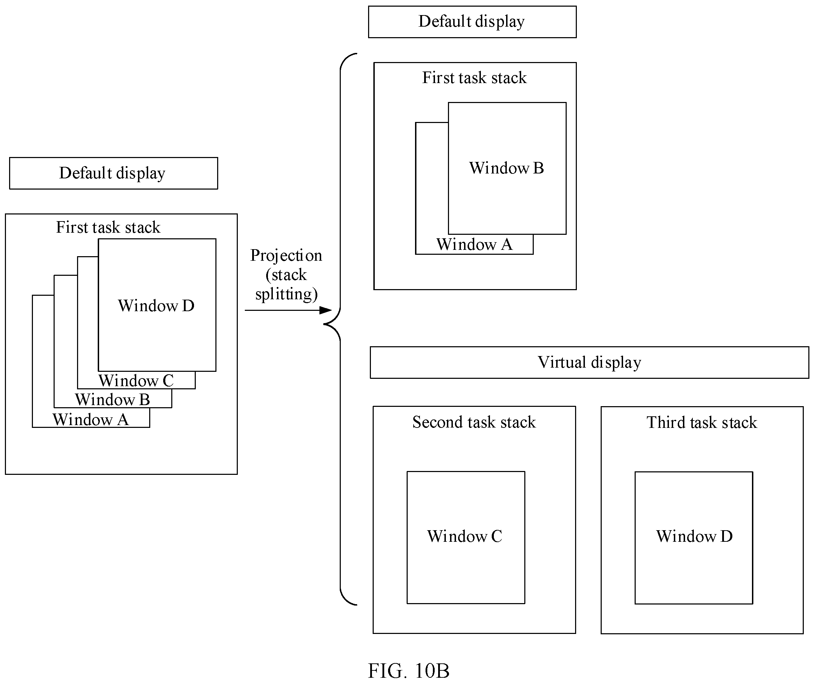

In an example shown in FIG. 10A(a) to FIG. 10A(d), implementation principles of the window C and the window D that are of the application and projected by the mobile phone are similar to that of the second window in Embodiment 1, that is, stack splitting processing is performed on the window C and the window D. Specifically, as shown in FIG. 10B, the first task stack includes the window A to the window D. Because the window D is at the top layer, the window D is displayed in the foreground of the mobile phone, which corresponds to FIG. 10A(a). Still refer to FIG. 10B. When detecting an operation for projecting the window C and the window D onto the PC, the mobile phone moves the window C to the second task stack, and moves the window D to the third task stack. The second task stack and the third task stack are displayed on the virtual display, and the windows in the second task stack and the third task stack are projected onto the PC. Herein, an example in which the window C and the window D are located in different task stacks after being moved from the first task stack is used. It may be understood that, after being moved from the first task stack, the window C and the window D may also be located in a same task stack. For example, both the window C and the window D are located in the second task stack. In this case, there is no need to establish the third task stack.

It should be noted that when the window C is moved from the first task stack to the second task stack, an original task stack marker may be set for the second task stack. The original task stack marker is used to represent an original task stack to which the window in the second task stack belongs. That is, the original task stack marker set for the second task stack is a marker of the first task stack, for example, an ID of the first task stack. A task stack marker is set, so that a window in a second task stack can be easily returned to an original first task stack when a projection process ends. Similarly, when the window D is moved from the first task stack to the third task stack, an original task stack marker set for the third task stack is also the ID of the first task stack.

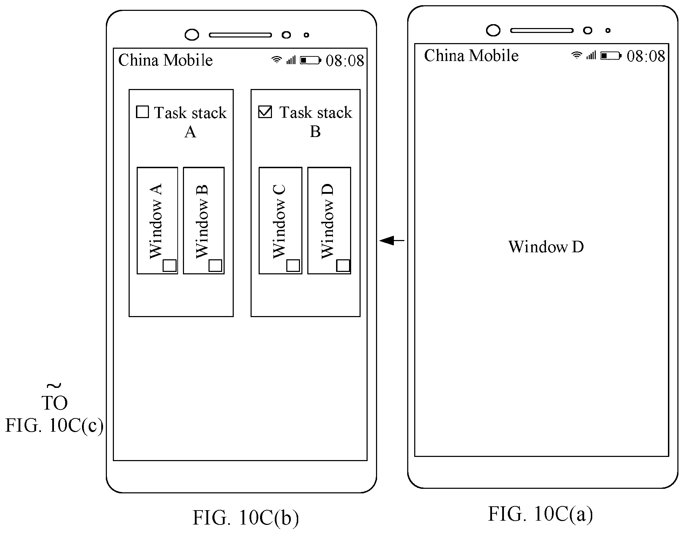

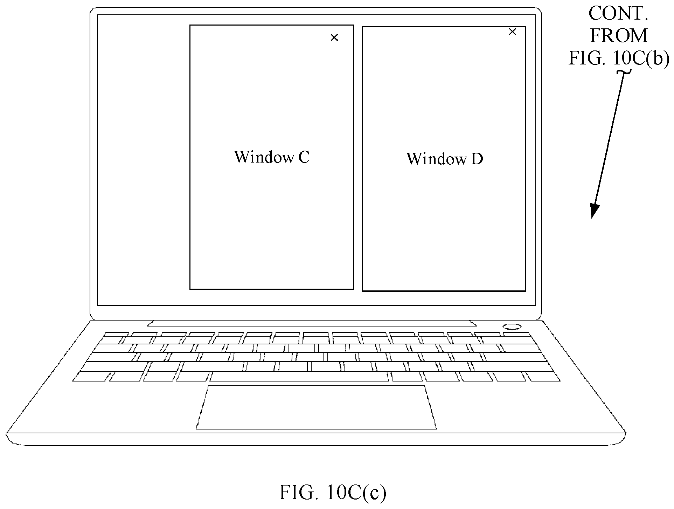

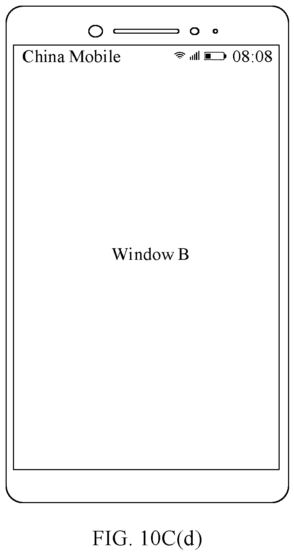

For example, in FIG. 10A(a) to FIG. 10A(d), and FIG. 10B, the window A to the window D are located in a same task stack, namely, the first task stack. The user may select a to-be-projected window from the task stack. Simply, selection is performed from a dimension of a window. Optionally, the mobile phone may further perform selection from a dimension of a task stack. For example, refer to FIG. 10C(a). The window D of the application is displayed in the foreground of the mobile phone. When detecting the preset operation, the mobile phone displays the interface shown in FIG. 10C(b) in response to the preset operation. The interface includes all task stacks of an application in the foreground, or all task stacks of each of all currently running applications. For example, the interface displays all task stacks of the application in the foreground, for example, a task stack A and a task stack B. The task stack A includes two windows, and the task stack B includes two windows. It is assumed that, when detecting an operation for selecting the task stack B, the mobile phone projects all windows in the task stack B onto the PC, as shown in FIG. 10C(c). In this case, the mobile phone displays the window B (for example, the window B is at the top of the task stack A).

Optionally, in FIG. 10C(b), the window A to the window D may alternatively be snapshots of the windows. For example, when detecting the foregoing preset operation, the mobile phone obtains a window snapshot of each window from SurfaceFlinger, and displays the window snapshot in a form of a task stack.

Optionally, a window projected onto the PC may be closed. For example, refer to FIG. 10A(a) to FIG 10A(d). The window C includes a "Close" control 1001. When an operation for tapping the "Close" control 1001 in the window C is detected on the PC, the window C is closed. That is, the window C is not displayed on the PC.

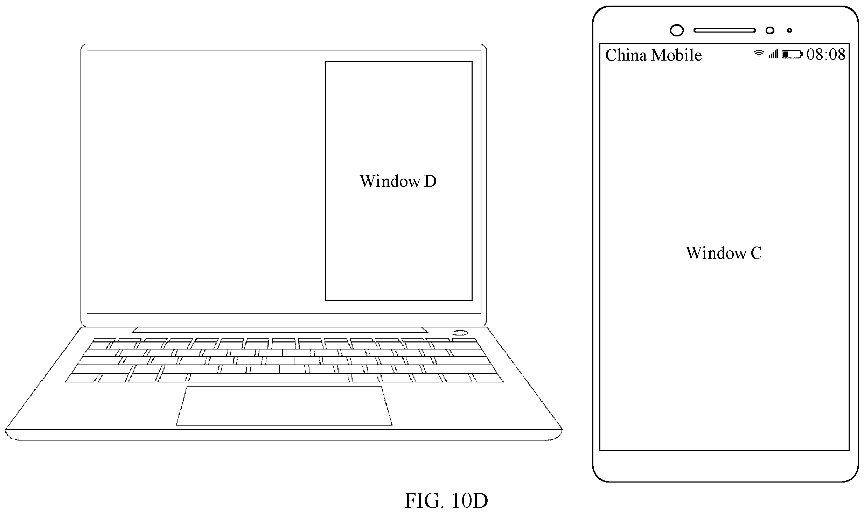

Optionally, when the window C is closed on the PC, the window C may further return to the mobile phone for display. For example, still refer to FIG. 10A(a) to FIG. 10A(d). When the operation for tapping the "Close" control 1001 in the window C is detected on the PC, the PC sends an instruction to the mobile phone. The instruction is used to instruct the mobile phone to display the window C. Therefore, the window C is closed on the PC, and the window C is displayed on the mobile phone, as shown in FIG. 10D.

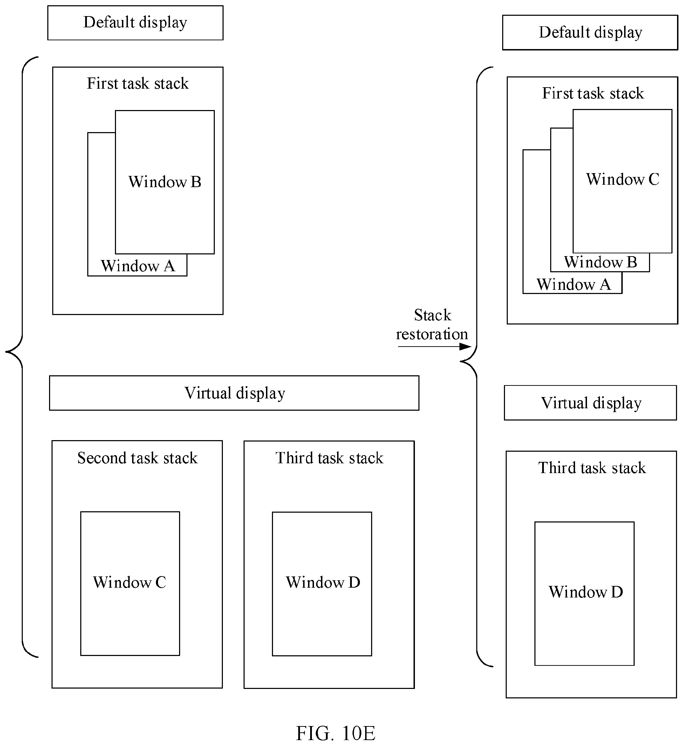

That the window C returns to the mobile phone for display can be implemented according to a stack restoration principle. Specifically, refer to FIG. 10E. The window C is located in the second task stack. Because the original task stack marker set for the second task stack is the ID of the first task stack, the mobile phone may determine, based on the original task stack marker, that an original task stack for the window C is the first task stack. The mobile phone returns the window C from the second task stack to the first task stack. In this case, the window C in the first task stack covers the window B and the window A. Therefore, the window C is displayed on the mobile phone, and the window C is closed on the PC. Optionally, the mobile phone may further close the second task stack, as shown in FIG. 10E.

In a first manner, when the window C is closed on the PC, the window C returns to the mobile phone for display. In a second manner, when the window C is closed on the PC, the window C does not return to the mobile phone for display. In this case, the mobile phone may use the first mode or the second mode by default. Alternatively, the user may select the first manner or the second manner. For example, the mobile phone or the PC includes a switching button, and the first manner or the second manner is selected by using the switching button.

Optionally, after the window C is projected onto the PC, when detecting an operation for opening the window C, the mobile phone may also pull back the window C on the PC. For example, when detecting the operation for opening the window C, the mobile phone sends an instruction to the PC. The instruction is used to instruct the PC to close the window C. Therefore, the window C is closed on the PC, and the window C is displayed on the mobile phone, as shown in FIG. 10D.

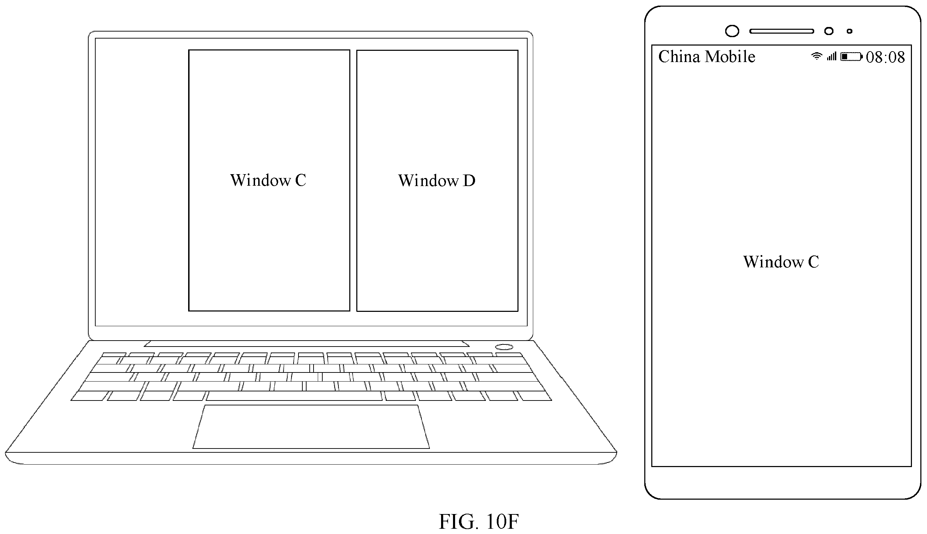

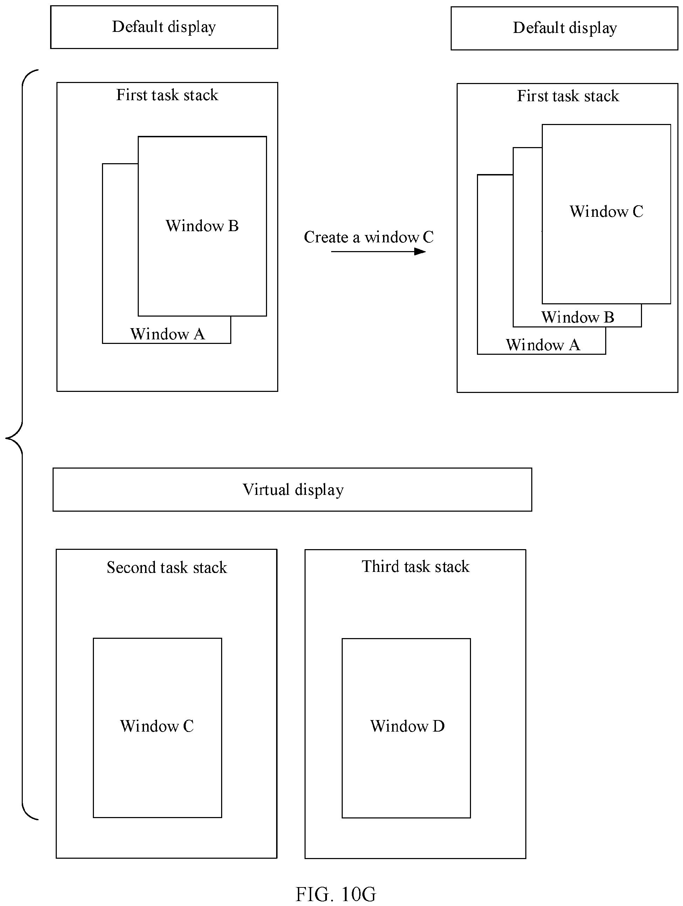

Optionally, when detecting an operation for opening the window C, the mobile phone may not pull back the window C on the PC. FIG. 10A(d) is still used as an example. The window B is displayed on the mobile phone, and the window C and the window D are displayed on the PC. In this case, when detecting the operation for opening the window C, the window C is displayed in the foreground of the mobile phone, and the window C is still displayed on the PC, as shown in FIG. 10F. If the mobile phone does not pull back the window C on the PC, refer to FIG. 10G for an implementation principle. When detecting the operation for opening the window C, the mobile phone creates the window C in the first task stack, and the second task stack still includes the window C. Therefore, the window C is displayed on both the phone and the PC.

Optionally, in FIG. 10G, the window C created in the first task stack may be a reused window C in the second task stack, or may be a newly created window C. Alternatively, the mobile phone may determine whether the window C supports a plurality of instances. If the window C supports the plurality of instances, a new window C is created. If the window C does not support the plurality of instances, the window C in the second task stack is reused.

In a first manner, when the window C is opened on the mobile phone, the window C on the PC is pulled back to the mobile phone. In a second manner, when the window C is opened on the mobile phone, the window C on the PC is not pulled back to the mobile phone. In this case, the mobile phone may use the first mode or the second mode by default. Alternatively, the user may select the first manner or the second manner. For example, the mobile phone or the PC includes a switching button, and the first manner or the second manner is selected by using the switching button.

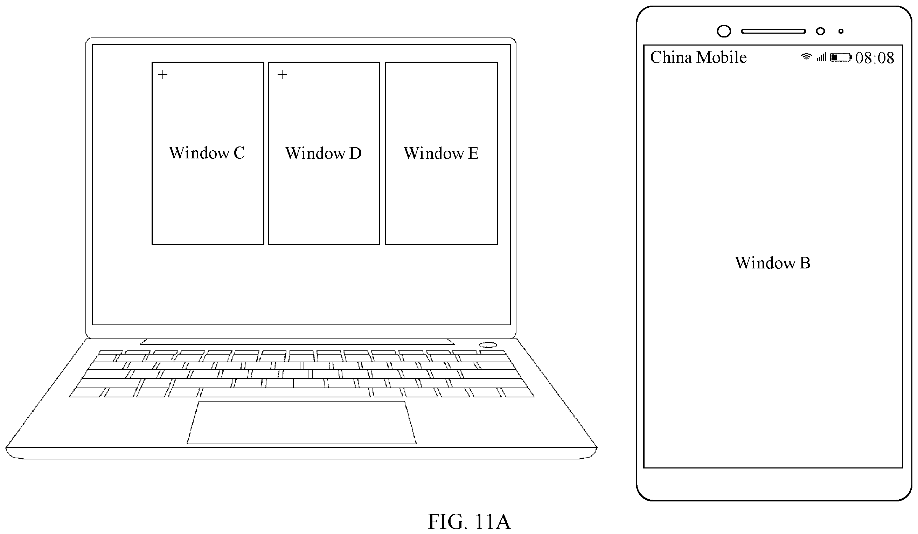

Optionally, the user may open a new window of the application on the PC. For example, refer to FIG. 11A. The mobile phone displays the window B, and the PC displays the window C and the window D. When detecting a tapping operation on the "+" button in the window D, the PC displays a window E of the application. The window E may be a fixed window by default, for example, a home page window of the application or a window specified by the user. Alternatively, the window E may be an upper-layer window or a lower-layer window of the window D in all windows opened by the application. The lower-layer window is used as an example. When detecting the tapping operation on the "+" button in the window D, the PC sends an instruction to the mobile phone, and the mobile phone determines that the next-layer window of the window D is the window C, and the window C is already displayed on the PC. In this case, the mobile phone may continue to determine whether a next-layer window of the window C, namely, the window B, is projected onto the PC. If not, the window B is projected onto the PC. In this case, the window B may no longer be displayed in the foreground of the mobile phone, but a next-layer window of the window B, namely, the window A is displayed.

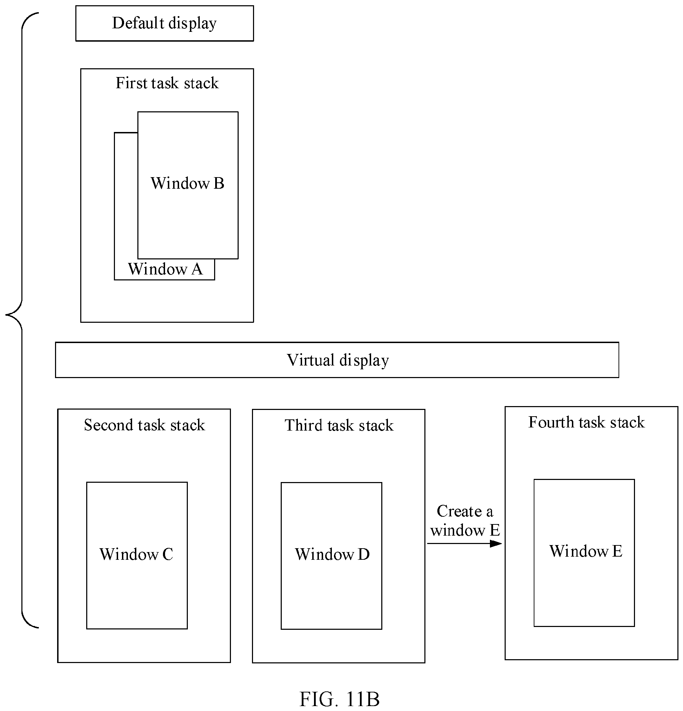

Specifically, for an implementation principle of opening the window E of the application on the PC, refer to FIG. 11B. When detecting an operation for opening the window E, the PC sends an instruction to the mobile phone. The instruction is used to instruct to open the window E on the PC. After receiving the instruction, the mobile phone creates a fourth task stack, and creates the window E in the fourth task stack. The fourth task stack is displayed on the virtual display, and therefore is projected onto the PC. Therefore, the window E is displayed on the PC. If the window E is the window B, the window B in the first task stack in FIG. 11B is moved to the fourth task stack.

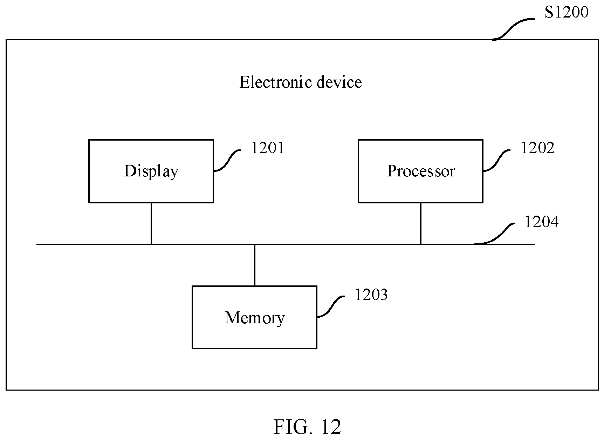

Based on the foregoing embodiments, an embodiment of this application further provides an electronic device. The electronic device may be the primary device or the target device. As shown in FIG. 12, an electronic device 1200 may include a display 1201, one or more processors 1202, a memory 1203, and one or more computer programs (not shown in the figure). The foregoing components may be coupled by using one or more communication buses 1204.

The display 1201 is configured to display a related user interface such as an interface, an image, and a video of an application. The memory 1203 stores one or more computer programs. The one or more computer programs include instructions. The processor 1202 invokes the instructions stored in the memory 1203, so that the electronic device 1200 performs the application window projection method provided in embodiments of this application.

In the foregoing embodiments provided in this application, the method provided in the embodiments of this application is described from a perspective in which an electronic device serves as an execution body. To implement functions in the foregoing method provided in embodiments of this application, the terminal device may include a hardware structure and/or a software module, and implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

According to the context, the term "when" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)". In addition, in the foregoing embodiments, relationship terms such as first and second are used to distinguish one entity from another, but do not limit any actual relationship and sequence between these entities.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of procedures or functions according to embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The available medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

A person skilled in the art should be aware that, in the foregoing one or more examples, the functions described in embodiments of this application may be implemented by using hardware, software, firmware, or any combination thereof. When the functions are implemented by software, the foregoing functions may be stored in a computer-readable medium or transmitted as one or more instructions or code in the computer-readable medium. The computer-readable medium includes a computer storage medium and a communication medium. The communication medium includes any medium that enables a computer program to be transmitted from one place to another. The storage medium may be any usable medium accessible by a general-purpose computer or a dedicated computer.

In the foregoing specific implementations, the objectives, technical solutions, and advantageous effect of embodiments of this application are further described in detail. It should be understood that the foregoing descriptions are merely specific implementations of embodiments of this application, but are not intended to limit the protection scope of embodiments of this application. Any modification, equivalent replacement, improvement, or the like made based on the technical solutions in embodiments of this application shall fall within the protection scope of embodiments of this application. According to the foregoing descriptions in this specification of this application, technologies in the art may use or implement the content in embodiments of this application. Any modification based on the disclosed content shall be considered obvious in the art. The basic principles described in embodiments of this application may be applied to other variations without departing from the essence and scope of this application. Therefore, the content disclosed in embodiments of this application is not limited to the described embodiments and designs, but may also be extended to a maximum scope that is consistent with the principles and new features disclosed in this application.

Although this application is described with reference to specific features and embodiments thereof, it is clear that various modifications and combinations may be made to this application without departing from the spirit and scope of embodiments of this application. Correspondingly, the specification and accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the scope of this application. In this way, embodiments of this application are intended to cover these modifications and variations provided that they fall within the protection scope defined by the following claims and their equivalent technologies of this application.

## Claims

1. An application window projection method, applicable to a system comprising a first electronic device and a second electronic device, wherein the method comprises:
establishing, by the first electronic device, a connection to the second electronic device;
projecting, by the first electronic device, a first window of an application onto the second electronic device;
displaying, by the second electronic device, the first window; and
displaying, by the first electronic device, a second window of the application.

2. The method according to claim 1, wherein the second window is a window previous to the first window, a default window of the application, or a specified window of the application.

3. The method according to claim 1 or 2, wherein the projecting, by the first electronic device, a first window of an application onto the second electronic device comprises:
projecting, by the first electronic device, the first window onto the second electronic device in response to an operation for opening the first window.

4. The method according to claim 3, wherein the operation for opening the first window comprises an operation for opening an image and/or an operation for playing a video file.

5. The method according to claim 1 or 2, wherein the projecting, by the first electronic device, a first window of an application onto the second electronic device comprises:
displaying, by the first electronic device, the first window in response to an operation for opening the first window; and
projecting, by the first electronic device, the first window onto the second electronic device in response to an operation for projecting the second window.

6. The method according to any one of claims 1 to 5, wherein before the projecting, by the first electronic device, a first window of an application onto the second electronic device, the method further comprises:
displaying, by the first electronic device, the first window and the second window; and
the displaying, by the first electronic device, a second window of the application comprises:
displaying, by the first electronic device, the second window in full screen.

7. The method according to any one of claims 1 to 6, wherein the projecting, by the first electronic device, a first window of an application onto the second electronic device comprises:
in response to a first operation, displaying a plurality of identifiers of a plurality of devices onto which a screen is to be projected; and
projecting, by the first electronic device, the first window onto the second electronic device in response to an operation for selecting an identifier of the second electronic device from the plurality of identifiers.

8. The method according to any one of claims 1 to 7, wherein the projecting, by the first electronic device, a first window of an application onto the second electronic device comprises:
displaying a plurality of candidate windows of the application in response to a second operation; and
projecting, by the first electronic device, the first window onto the second electronic device in response to an operation for selecting the first window from the plurality of candidate windows.

9. The method according to claim 8, wherein the candidate window comprises:
all windows of the application that have been opened by the first electronic device;
a preset window of the application;
a window that is of the application and that is specified by a user;
a window that is of the application and whose opening frequency or times of opening is greater than a preset value; or
a window that is of the application and whose foreground running duration is longer than preset duration.

10. The method according to any one of claims 1 to 9, wherein the method further comprises:
opening, by the first electronic device, a third window of the application;
projecting, by the first electronic device, the third window onto the second electronic device; and
displaying, by the second electronic device, the third window, wherein the third window on the second electronic device completely or incompletely covers the first window.

11. The method according to any one of claims 1 to 10, wherein the method further comprises:
in response to a first instruction used to return the first window to the first electronic device for display, displaying, by the first electronic device, the first window, and closing, by the second electronic device, the first window.

12. The method according to claim 11, wherein the first instruction used to return the first window to the first electronic device for display comprises:
an operation that is detected on the second electronic device and that is used to close the first window on the second electronic device; or
an operation that is detected on the first electronic device and that is used to open the first window on the first electronic device.

13. The method according to any one of claims 1 to 12, wherein the application further comprises a fourth window, and the method further comprises:
detecting, on the second electronic device, an operation for opening the second window;
sending, by the second electronic device, a second instruction to the first electronic device in response to the operation for opening the second window;
projecting, by the first electronic device, the second window onto the second electronic device in response to the received second instruction;
displaying, by the second electronic device, the second window, wherein the second window completely or incompletely covers the first window; and
displaying, by the first electronic device, the fourth window.

14. The method according to any one of claims 1 to 12, wherein the application further comprises a fourth window, the system further comprises a third electronic device, and the method further comprises:
connecting the first electronic device to the third electronic device;
projecting, by the first electronic device, the second window onto the third electronic device;
displaying, by the third electronic device, the second window; and
displaying, by the first electronic device, the fourth window.

15. The method according to any one of claims 1 to 14, wherein the projecting, by the first electronic device, a first window of an application onto the second electronic device comprises:
creating, by the first electronic device, the first window in a first task stack, wherein a window in the first task stack is configured to be projected onto the second electronic device for display; and
the first task stack is different from a second task stack in which the second window is located, and a window in the second task stack is configured to be displayed on a display of the first electronic device.

16. The method according to any one of claims 1 to 14, wherein the projecting, by the first electronic device, a first window of an application onto the second electronic device comprises:
creating, by the first electronic device, the first window in a second task stack in response to the operation for opening the first window, wherein a window in the second task stack is configured to be displayed on a display of the first electronic device; and
in response to an operation for projecting the first window, creating, by the first electronic device, the first window in a first task stack, and closing the first window in the second task stack, wherein a window in the first task stack is configured to be projected onto the second electronic device for display.

17. The method according to claim 16, wherein the method further comprises:
in response to an operation for returning the first window to the first electronic device for display, determining, by the first electronic device based on an original stack marker of the first task stack, that an original task stack of the first window is the second task stack;
creating, by the first electronic device, the first window in the second task stack; and
closing, by the first electronic device, the first window in the first task stack.

18. The method according to any one of claims 1 to 17, wherein the projecting, by the first electronic device, a first window of an application onto the second electronic device comprises:
displaying, by the first electronic device, a plurality of task stacks of the application in response to a preset operation; and
in response to an operation for selecting a third task stack from the plurality of task stacks, projecting, by the first electronic device, all windows in the third task stack onto the second electronic device.

19. An application window projection method, applicable to a first electronic device, wherein the first electronic device comprises an application, the application comprises a first window and a second window, and the method comprises:
connecting the first electronic device to a second electronic device;
projecting, by the first electronic device, the first window onto the second electronic device for display; and
displaying, by the first electronic device, the second window.

20. The method according to claim 19, wherein the second window is a window previous to the first window, a default window of the application, or a specified window of the application.

21. The method according to claim 19 or 20, wherein the projecting, by the first electronic device, the first window onto the second electronic device for display comprises:
in response to an operation for opening the first window, projecting, by the first electronic device, the first window onto the second electronic device for display.

22. The method according to claim 21, wherein the operation for opening the first window comprises an operation for opening an image and/or an operation for playing a video file.

23. The method according to claim 19 or 20, wherein the projecting, by the first electronic device, the first window onto the second electronic device for display comprises:
displaying, by the first electronic device, the first window in response to an operation for opening the first window; and
in response to an operation for projecting the second window, projecting, by the first electronic device, the first window onto the second electronic device for display.

24. The method according to any one of claims 19 to 23, wherein before the projecting, by the first electronic device, the first window onto the second electronic device, the method further comprises:
displaying, by the first electronic device, the first window and the second window; and
the displaying, by the first electronic device, the second window comprises:
displaying, by the first electronic device, the second window in full screen.

25. The method according to any one of claims 19 to 23, wherein the projecting, by the first electronic device, the first window onto the second electronic device for display comprises:
displaying a plurality of candidate windows of the application in response to a second operation; and
in response to an operation for selecting the first window from the plurality of candidate windows, projecting, by the first electronic device, the first window onto the second electronic device for display.

26. The method according to any one of claims 19 to 25, wherein the application further comprises a third window, a system further comprises a third electronic device, and the method further comprises:
connecting the first electronic device to the third electronic device;
projecting, by the first electronic device, the second window onto the third electronic device;
displaying, by the third electronic device, the second window; and
displaying, by the first electronic device, the third window.

27. The method according to any one of claims 19 to 26, wherein the projecting, by the first electronic device, the first window onto the second electronic device comprises:
creating, by the first electronic device, the first window in a first task stack, wherein a window in the first task stack is configured to be projected onto the second electronic device for display, the first task stack is different from a second task stack in which the second window is located, and a window in the second task stack is configured to be displayed on a display of the first electronic device.

28. The method according to any one of claims 19 to 26, wherein the projecting, by the first electronic device, the first window onto the second electronic device comprises:
creating, by the first electronic device, the first window in a second task stack in response to the operation for opening the first window, wherein a window in the second task stack is configured to be displayed on a display of the first electronic device; and
in response to an operation for projecting the first window, creating, by the first electronic device, the first window in a first task stack, and closing the first window in the second task stack, wherein a window in the first task stack is configured to be projected onto the second electronic device for display.

29. An electronic device, comprising a display, one or more processors, a memory, and one or more programs, wherein the one or more programs are stored in the memory, the one or more programs comprise instructions, and when the instructions are executed by the electronic device, the electronic device is enabled to perform the method according to any one of claims 1 to 28.

30. A computer-readable storage medium, wherein the computer-readable storage medium is configured to store a computer program, and when the computer program is run on a computer, the computer is enabled to perform the method according to any one of claims 1 to 28.
